(19) Europäisches Patentamt
European Patent Office
Office européen des brevets

(11) **EP 4 614 284 A1**

(12) **EUROPEAN PATENT APPLICATION**
published in accordance with Art. 153(4) EPC

(43) Date of publication:
**10.09.2025 Bulletin 2025/37**

(21) Application number: **22967496.5**

(22) Date of filing: **05.12.2022**

(51) International Patent Classification (IPC):
**G06F 3/033** $^{(2013.01)}$     **G01S 13/00** $^{(2006.01)}$

(52) Cooperative Patent Classification (CPC):
**G01S 13/00; G06F 3/033**

(86) International application number:
**PCT/CN2022/136687**

(87) International publication number:
**WO 2024/119333 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **PENG, Xiaohui
Shenzhen, Guangdong 518129 (CN)**

• **LUO, Jiajin
Shenzhen, Guangdong 518129 (CN)**
• **ZHOU, Baojian
Shenzhen, Guangdong 518129 (CN)**
• **YAN, Min
Shenzhen, Guangdong 518129 (CN)**
• **YANG, Xun
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **ANGLE MEASUREMENT METHOD AND COMMUNICATION APPARATUS**

(57)     This application provides an angle measurement method and a communication apparatus, applied to the communication field. The method includes: A first communication apparatus and a second communication apparatus determine N target frequencies. The first communication apparatus sends a sensing signal to the second communication apparatus on the N target frequencies. The second communication apparatus performs angle measurement based on the sensing signal. The N target frequencies belong to a candidate frequency set that includes M candidate frequencies, $1<N<M$, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set. An angle measurement range that can be obtained in the solutions is a least common multiple of angle measurement ranges corresponding to the N target frequencies, so that the angle measurement range can be expanded while an angle measurement resolution is ensured.

FIG. 8

## Description

## TECHNICAL FIELD

This application relates to the communication field, and in particular, to an angle measurement method and a communication apparatus.

## BACKGROUND

With development of multiple-input multiple-output (multiple-input multiple-output, MIMO) technologies, a diameter of an array is increasingly larger, and an available bandwidth is also increasingly larger. Angle of arrival (direction of arrival, DOA) estimation of a large-diameter array wideband signal is a valuable research problem. For the problem of DOA estimation of a large-diameter array wideband signal, the wideband signal may be divided into several sub-band signals that meet a narrowband condition, each sub-band is processed separately to obtain a DOA estimation result, and then DOA estimation results of a plurality of sub-bands are fused to obtain a final DOA estimation value. In this method, a smaller spacing between antenna array elements indicates a larger angle measurement range, but an angle measurement resolution is reduced at the same time. Consequently, both the angle measurement range and the angle measurement resolution cannot be ensured.

## SUMMARY

This application provides an angle measurement method and a communication apparatus, to expand an angle measurement range while ensuring an angle measurement resolution.

According to a first aspect, an angle measurement method is provided. The method may be performed by a first communication apparatus, or may be performed by a component (for example, a processor, a chip, or a chip system) of the first communication apparatus, or may be implemented by a logical module or software that can implement all or some functions of the first communication apparatus. The following uses an example in which the method is performed by the first communication apparatus.

The method includes: determining N target frequencies; and sending a sensing signal on the N target frequencies, where the sensing signal is used by a second communication apparatus to perform angle measurement. The N target frequencies belong to a candidate frequency set, the candidate frequency set includes M candidate frequencies, 1<N<M, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, where the processed angle measurement range is a positive integer.

It should be understood that both the first communication apparatus and the second communication apparatus support the N target frequencies.

It should be further understood that angle measurement described in this application may refer to measuring a DOA of the signal.

According to the angle measurement method provided in this application, a proper frequency design is used. To be specific, a sensing signal is sent on N target frequencies that meet a corresponding condition in the M candidate frequencies, and angle measurement is performed in combination with the sensing signal on the N target frequencies. An angle measurement range that can be obtained is a least common multiple of angle measurement ranges corresponding to the N target frequencies. When hardware resources are the same, compared with a solution in which no frequency selection is performed and a signal on the M candidate frequencies is used for angle measurement (the angle measurement range is an angle measurement range corresponding to a smallest frequency in the M candidate frequencies), this solution can save frequency resources while ensuring an angle measurement resolution, and can expand an angle measurement range, that is, expand a maximum unambiguous range of angle measurement. In addition, because this solution does not need to ensure the maximum unambiguous range of angle measurement by using a small physical antenna spacing, mutual coupling of signals between antennas can be reduced.

In a possible implementation, that the first communication apparatus sends the sensing signal on any target frequency may also be understood as that the first communication apparatus sends a sensing signal whose bandwidth is B by using the target frequency as a center frequency. In this sending manner, a narrowband condition $\left| \frac{D}{\lambda_{min}} - \frac{D}{\lambda_{max}} \right| \ll 1$ needs to be met, for example, $\left| \frac{D}{\lambda_{min}} - \frac{D}{\lambda_{max}} \right| < 0.1$ is met. A maximum frequency of the sensing signal whose bandwidth is B is $f_{max} = f + B/2$, a minimum frequency of the sensing signal whose bandwidth is B is $f_{min} = f - B/2$, $\lambda_{min} = c/f_{max}$, $\lambda_{max} = c/f_{min}$, and D represents a diameter of an antenna array of the second communication apparatus.

In a possible implementation, a processed angle measurement range corresponding to any one of the candidate frequencies is obtained by performing first processing on an angle measurement range corresponding to the candidate frequency. For example, first processing includes rounding, expanding, and/or reducing. After the first processing, a proportional relationship between angle measurement ranges corresponding to the M candidate frequencies (or the N target frequencies) and processed angle measurement ranges corresponding to the M candidate frequencies (or the N target frequencies) remains unchanged.

For example, performing first processing on the angle measurement range corresponding to any candidate frequency may include: reserving k decimal places for a value obtained by dividing the angle measurement range corresponding to the candidate frequency by an angle measurement resolution, to obtain a first value, where k is an integer greater than or equal to 0; and multiplying the first value by $10^k$ to obtain the processed angle measurement range corresponding to the candidate frequency.

In an example, an angle measurement resolution corresponding to a largest candidate frequency that is supported by both the first communication apparatus and the second communication apparatus in the candidate frequency set may be used as the angle measurement resolution used in the first processing.

In a possible implementation, determining the N target frequencies includes: receiving frequency configuration information from the second communication apparatus. The frequency configuration information indicates the N target frequencies.

Based on this solution, the second communication apparatus may independently determine the N target frequencies, and then notify the first communication apparatus of information about the N target frequencies.

In a possible implementation, determining the N target frequencies includes: receiving the frequency configuration information from the third communication apparatus. The frequency configuration information indicates the N target frequencies.

Based on this solution, the third communication apparatus may independently determine the N target frequencies, and then notify the first communication apparatus of information about the N target frequencies.

In a possible implementation, before receiving the frequency configuration information from the second communication apparatus, the method further includes: sending information about the candidate frequency set to the second communication apparatus, where the first communication apparatus supports any candidate frequency in the candidate frequency set.

Based on this solution, the first communication apparatus may first send the information about the candidate frequency set to the second communication apparatus. The second communication apparatus may determine N target frequencies from the candidate frequency set based on the information about the candidate frequency set, and feed back information about the N target frequencies to the first communication apparatus. In this way, the first communication apparatus may determine the N target frequencies.

In a possible implementation, before receiving the frequency configuration information from the second communication apparatus, the method further includes: sending information about a first frequency set to the third communication apparatus, where the first communication apparatus supports any frequency in the first frequency set, the first frequency set includes any candidate frequency in the candidate frequency set, and both the first communication apparatus and the second communication apparatus support any candidate frequency in the candidate frequency set.

Based on this solution, the first communication apparatus may first send the information about the first frequency set to the third communication apparatus. The third communication apparatus may determine the candidate frequency set based on the information about the first frequency set, then determine N target frequencies from the candidate frequency set, and feed back information about the N target frequencies to the first communication apparatus. In this way, the first communication apparatus may determine the N target frequencies.

In a possible implementation, before sending the information about the candidate frequency set to the second communication apparatus, the method further includes: receiving indication information from the second communication apparatus, where the indication information indicates to enable an angle measurement function.

Based on this solution, after receiving the indication information of the second communication apparatus, the first communication apparatus may send the information about the candidate frequency set to the second communication apparatus. In this way, when angle measurement does not need to be performed, the first communication apparatus does not need to send the information about the candidate frequency set to the second communication apparatus, so that resources can be saved.

In a possible implementation, before sending the information about the first frequency set to the third communication apparatus, the method further includes: receiving the indication information from the third communication apparatus, where the indication information indicates to enable an angle measurement function.

Based on this solution, after receiving the indication information of the third communication apparatus, the first communication apparatus may send the information about the candidate frequency set to the third communication apparatus. In this way, when angle measurement does not need to be performed, the first communication apparatus does not need to send the information about the first frequency set to the third communication apparatus, so that resources can be saved.

In a possible implementation, before sending the sensing signal on the N target frequencies to the second communication apparatus, the method further includes: sending frequency configuration information to the second communication apparatus, where the frequency configuration information indicates the N target frequencies.

Based on this solution, the first communication apparatus may independently determine the N target frequencies, and then notify the second communication apparatus of information about the N target frequencies.

In a possible implementation, before determining the N target frequencies, the method further includes: receiving information about the candidate frequency set from the second communication apparatus and array structure information of the second communication apparatus, where the array structure information is used to determine the angle measurement range corresponding to the candidate frequency, and the second communication apparatus supports any candidate frequency in the candidate frequency set. For example, the array structure information indicates a smallest spacing between array elements in an antenna array. Further, the array structure information indicates a diameter of the antenna array.

Based on this solution, the second communication apparatus may first send the information about the candidate frequency set and the array structure information of the second communication apparatus to the first communication apparatus. The first communication apparatus may determine N target frequencies from the candidate frequency set based on the information about the candidate frequency set and the array structure information of the second communication apparatus, and feed back information about the N target frequencies to the second communication apparatus.

In a possible implementation, before receiving the information about the candidate frequency set from the second communication apparatus, the method further includes: sending indication information to the second communication apparatus, where the indication information indicates to enable an angle measurement function.

Based on this solution, after receiving the indication information of the first communication apparatus, the second communication apparatus may send the information about the candidate frequency set to the first communication apparatus. In this way, when angle measurement does not need to be performed, the second communication apparatus does not need to send the information about the candidate frequency set to the first communication apparatus, so that resources can be saved.

In a possible implementation, at least two candidate frequencies in the candidate frequency set are located in different frequency bands.

According to a second aspect, an angle measurement method is provided. The method may be performed by a second communication apparatus, or may be performed by a component (for example, a processor, a chip, or a chip system) of the second communication apparatus, or may be implemented by a logical module or software that can implement all or some functions of the second communication apparatus. The following uses an example in which the method is performed by the second communication apparatus.

The method includes: determining N target frequencies; receiving a sensing signal from a first communication apparatus on the N target frequencies; and performing angle measurement based on the sensing signal. The N target frequencies belong to a candidate frequency set, the candidate frequency set includes M candidate frequencies, 1<N<M, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, where the processed angle measurement range is a positive integer.

It should be understood that both the first communication apparatus and the second communication apparatus support the N target frequencies.

According to the angle measurement method provided in this application, a proper frequency design is used. To be specific, a sensing signal is sent on N target frequencies that meet a corresponding condition in the M candidate frequencies, and angle measurement is performed in combination with the sensing signal on the N target frequencies. An angle measurement range that can be obtained is a least common multiple of angle measurement ranges corresponding to the N target frequencies. When hardware resources are the same, compared with a solution in which no frequency selection is performed and a signal on the M candidate frequencies is used for angle measurement (the angle measurement range is an angle measurement range corresponding to a smallest frequency in the M candidate frequencies), this solution can save frequency resources while ensuring an angle measurement resolution, and can expand an angle measurement range, that is, expand a maximum unambiguous range of angle measurement. In addition, because this solution does not need to ensure the maximum unambiguous range of angle measurement by using a small physical antenna spacing, mutual coupling of signals between antennas can be reduced.

In a possible implementation, that the second communication apparatus receives the sensing signal on the N target frequencies may also be understood as that the second communication apparatus receives a sensing signal whose bandwidth is B by using the target frequency as a center frequency. In this manner, a narrowband condition $\left|\frac{D}{\lambda_{min}} - \frac{D}{\lambda_{max}}\right| \ll 1$ needs to be met, for example, $\left|\frac{D}{\lambda_{min}} - \frac{D}{\lambda_{max}}\right| < 0.1$ is met. A maximum frequency of the sensing signal whose bandwidth is B is $f_{max} = f + B/2$, a minimum frequency of the sensing signal whose bandwidth is B is $f_{min} = f - B/2$, $\lambda_{min} = c/f_{max}$, $\lambda_{max} = c/f_{min}$, and D represents a diameter of an antenna array of the second communication apparatus.

In a possible implementation, a processed angle measurement range corresponding to any one of the candidate frequencies is obtained by performing first processing on an angle measurement range corresponding to the candidate frequency. For example, first processing includes rounding, expanding, and/or reducing. After the first processing, a proportional relationship between angle measurement ranges corresponding to the M candidate frequencies (or the N target frequencies) and processed angle measurement ranges corresponding to the M candidate frequencies (or the N target frequencies) remains unchanged.

For example, performing first processing on the angle measurement range corresponding to any candidate frequency may include: reserving k decimal places for a value obtained by dividing the angle measurement range corresponding to the candidate frequency by an angle measurement resolution, to obtain a first value, where k is an integer greater than or equal to 0; and multiplying the first value by $10^k$ to obtain the processed angle measurement range corresponding to the candidate frequency.

In an example, an angle measurement resolution corresponding to a largest candidate frequency that is supported by both the first communication apparatus and the second communication apparatus in the candidate frequency set may be used as the angle measurement resolution used in the first processing.

In a possible implementation, before receiving the sensing signal on the N target frequencies from the first communication apparatus, the method further includes: sending frequency configuration information to the first communication apparatus, where the frequency configuration information indicates the N target frequencies.

Based on this solution, the second communication apparatus may independently determine the N target frequencies, and then notify the first communication apparatus of information about the N target frequencies.

In a possible implementation, before determining the N target frequencies, the method further includes: receiving information about the candidate frequency set from the first communication apparatus, where the first communication apparatus supports any candidate frequency in the candidate frequency set.

Based on this solution, the first communication apparatus may first send the information about the candidate frequency set to the second communication apparatus. The second communication apparatus may determine N target frequencies from the candidate frequency set based on the information about the candidate frequency set, and feed back information about the N target frequencies to the first communication apparatus.

In a possible implementation, before receiving the information about the candidate frequency set from the first communication apparatus, the method further includes: sending indication information to the first communication apparatus, where the indication information indicates to enable an angle measurement function.

Based on this solution, after receiving the indication information of the second communication apparatus, the first communication apparatus may send the information about the candidate frequency set to the second communication apparatus. In this way, when angle measurement does not need to be performed, the first communication apparatus does not need to send the information about the candidate frequency set to the second communication apparatus, so that resources can be saved.

In a possible implementation, determining the N target frequencies includes: receiving frequency configuration information from the first communication apparatus, where the frequency configuration information indicates the N target frequencies.

Based on this solution, the first communication apparatus may independently determine the N target frequencies, and then notify the second communication apparatus of information about the N target frequencies. In this way, the second communication apparatus may determine the N target frequencies.

In a possible implementation, determining the N target frequencies includes: receiving the frequency configuration information from a third communication apparatus, where the frequency configuration information indicates the N target frequencies.

Based on this solution, the third communication apparatus may independently determine the N target frequencies, and then notify the second communication apparatus of information about the N target frequencies. In this way, the second communication apparatus may determine the N target frequencies.

In a possible implementation, before receiving the frequency configuration information from the first communication apparatus, the method further includes: sending information about the candidate frequency set and array structure information of the second communication apparatus to the first communication apparatus, where the array structure information is used to determine the angle measurement range corresponding to the candidate frequency, and the second communication apparatus supports any candidate frequency in the candidate frequency set. For example, the array structure information indicates a smallest spacing between array elements in an antenna array. Further, the array structure information indicates a diameter of the antenna array.

Based on this solution, the second communication apparatus may first send the information about the candidate frequency set and the array structure information of the second communication apparatus to the first communication apparatus. The first communication apparatus may determine N target frequencies from the candidate frequency set based on the information about the candidate frequency set and the array structure information of the second communication apparatus, and feed back information about the N target frequencies to the second communication apparatus. In this way, the second communication apparatus may determine the N target frequencies.

In a possible implementation, before receiving the frequency configuration information from the third communication apparatus, the method further includes: sending information about a second frequency set and the array structure information of the second communication apparatus to the third communication apparatus, where the second communication apparatus supports any frequency in the second frequency set, the second frequency set includes any candidate frequency in the candidate frequency set, and both the first communication apparatus and the second communication apparatus support any candidate frequency in the candidate frequency set. For example, the array structure information indicates a smallest spacing between array elements in an antenna array. Further, the array structure information indicates a diameter of the antenna array.

Based on this solution, the second communication apparatus may first send the information about the second frequency set and the array structure information of the second communication apparatus to the third communication apparatus. The third communication apparatus may determine N target frequencies from the candidate frequency set based on the information about the second frequency set and the array structure information of the second communication apparatus, and feed back information about the N target frequencies to the second communication apparatus. In this way, the second communication apparatus may determine the N target frequencies.

In a possible implementation, before sending the information about the candidate frequency set to the first communication apparatus, the method further includes: receiving indication information from the first communication apparatus, where the indication information indicates to enable an angle measurement function.

Based on this solution, after receiving the indication information of the first communication apparatus, the second communication apparatus may send the information about the candidate frequency set to the first communication apparatus. In this way, when angle measurement does not need to be performed, the second communication apparatus does not need to send the information about the candidate frequency set to the first communication apparatus, so that resources can be saved.

In a possible implementation, before sending the information about the second frequency set to the third communication apparatus, the method further includes: receiving the indication information from the third communication apparatus, where the indication information indicates to enable an angle measurement function.

Based on this solution, after receiving the indication information of the third communication apparatus, the second communication apparatus may send the information about the second frequency set to the third communication apparatus. In this way, when angle measurement does not need to be performed, the second communication apparatus does not need to send the information about the second frequency set to the third communication apparatus, so that resources can be saved.

In a possible implementation, at least two candidate frequencies in the candidate frequency set are located in different frequency bands.

According to a third aspect, an angle measurement method is provided. The method may be performed by a third communication apparatus, or may be performed by a component (for example, a processor, a chip, or a chip system) of the third communication apparatus, or may be implemented by a logical module or software that can implement all or some functions of the third communication apparatus. The following uses an example in which the method is performed by the third communication apparatus.

The method includes: determining a candidate frequency set, where the candidate frequency set includes M candidate frequencies, and both a first communication apparatus and a second communication apparatus support any candidate frequency in the candidate frequency set; determining N target frequencies in the candidate frequency set; and sending frequency configuration information to the first communication apparatus and the second communication apparatus, where the frequency configuration information indicates the N target frequencies. $1<N<M$, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, where the processed angle measurement range is a positive integer. The sensing signal on the N target frequencies is used by the second communication apparatus to perform angle measurement.

According to the angle measurement method provided in this application, a proper frequency design is used. To be specific, a sensing signal is sent on N target frequencies that meet a corresponding condition in the M candidate frequencies, and angle measurement is performed in combination with the sensing signal on the N target frequencies. An angle measurement range that can be obtained is a least common multiple of angle measurement ranges corresponding to the N target frequencies. When hardware resources are the same, compared with a solution in which no frequency selection is performed and a signal on the M candidate frequencies is used for angle measurement (the angle measurement range is an angle measurement range corresponding to a smallest frequency in the M candidate frequencies), this solution can save frequency resources while ensuring an angle measurement resolution, and can expand an angle measurement range, that is, expand a maximum unambiguous range of angle measurement. In addition, because this solution does not need to ensure the maximum unambiguous range of angle measurement by using a small physical antenna spacing, mutual coupling of signals between antennas can be reduced.

In a possible implementation, a processed angle measurement range corresponding to any one of the candidate frequencies is obtained by performing first processing on an angle measurement range corresponding to the candidate frequency. For example, first processing includes rounding, expanding, and/or reducing. After the first processing, a proportional relationship between angle measurement ranges corresponding to the M candidate frequencies (or the N target frequencies) and processed angle measurement ranges corresponding to the M candidate frequencies (or the N target frequencies) remains unchanged.

For example, performing first processing on the angle measurement range corresponding to any candidate frequency may include: reserving k decimal places for a value obtained by dividing the angle measurement range corresponding to the candidate frequency by an angle measurement resolution, to obtain a first value, where k is an integer greater than or equal to 0; and multiplying the first value by $10^k$ to obtain the processed angle measurement range corresponding to the candidate frequency.

In an example, an angle measurement resolution corresponding to a largest candidate frequency that is supported by both the first communication apparatus and the second communication apparatus in the candidate frequency set may be used as the angle measurement resolution used in the first processing.

In a possible implementation, before determining the candidate frequency set, the method further includes: receiving information about a first frequency set from the first communication apparatus, where the first communication apparatus supports any frequency in the first frequency set; receiving information about a second frequency set from the second communication apparatus and array structure information of the second communication apparatus, where the array structure information is used to determine the angle measurement range corresponding to the candidate frequency, and the second communication apparatus supports any frequency in the second frequency set; and determining an intersection set of the first frequency set and the second frequency set as the determined candidate set.

In a possible implementation, before receiving the information about the first frequency set from the first communication apparatus, the method further includes: sending indication information to the first communication apparatus; and before receiving the information about the second frequency set from the second communication apparatus, the method further includes: sending the indication information to the second communication apparatus. The indication information indicates to enable an angle measurement function.

In a possible implementation, at least two candidate frequencies in the candidate frequency set are located in different frequency bands.

According to a fourth aspect, a communication apparatus is provided and includes a module or unit configured to perform the method according to the first aspect or any one of the possible implementations of the first aspect.

According to a fifth aspect, a communication apparatus is provided and includes a module or unit configured to perform the method according to the second aspect or any one of the possible implementations of the second aspect.

According to a sixth aspect, a communication apparatus is provided and includes a module or unit configured to perform the method according to the third aspect or any one of the possible implementations of the third aspect.

According to a seventh aspect, a communication apparatus is provided, including a processor. The processor is configured to enable, by executing a program or instructions stored in a memory or by using a logic circuit, the communication apparatus to perform the method according to the first aspect or any one of the possible implementations of the first aspect.

In a possible implementation, the apparatus further includes the memory.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the communication interface is configured to input and/or output a signal.

In an implementation, the apparatus is a first communication apparatus. For example, the communication interface may be a transceiver or an input/output interface.

In another implementation, the apparatus is a chip in the first communication apparatus. For example, the communication interface may be an input/output interface.

According to an eighth aspect, a communication apparatus is provided, including a processor. The processor is configured to enable, by executing a program or instructions stored in a memory or by using a logic circuit, the communication apparatus to perform the method according to the second aspect or any one of the possible implementations of the second aspect.

In a possible implementation, the apparatus further includes the memory.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the communication interface is configured to input and/or output a signal.

In an implementation, the apparatus is a second communication apparatus. For example, the communication interface may be a transceiver or an input/output interface.

In another implementation, the apparatus is a chip in the second communication apparatus. For example, the communication interface may be an input/output interface.

According to a ninth aspect, a communication apparatus is provided, including a processor. The processor is configured to enable, by executing a program or instructions stored in a memory or by using a logic circuit, the communication apparatus to perform the method according to the third aspect or any one of the possible implementations of the third aspect.

In a possible implementation, the apparatus further includes the memory.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the communication interface is configured to input and/or output a signal.

In an implementation, the apparatus is a third communication apparatus. For example, the communication interface may be a transceiver or an input/output interface.

In another implementation, the apparatus is a chip in the third communication apparatus. For example, the communication interface may be an input/output interface.

According to a tenth aspect, a processor is provided, including an input circuit, an output circuit, and a processing circuit. The processing circuit is configured to receive a signal through the input circuit, and transmit a signal through the output circuit, to enable the processor to perform the method according to any one of the foregoing aspects or the possible implementations of the aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to an eleventh aspect, a communication system is provided, including the foregoing first communication apparatus and second communication apparatus. Alternatively, the foregoing first communication apparatus, second communication apparatus, and third communication apparatus are included.

According to a twelfth aspect, a computer program product is provided. The computer program product includes a computer program (which may also be referred to as code or instructions). When the computer program is run, a computer is enabled to perform the method according to any one of the foregoing aspects or the possible implementations of the aspects.

According to a thirteenth aspect, a computer-readable storage medium is provided. The computer-readable storage medium stores a computer program (which may also be referred to as code or instructions). When the computer program is run on a computer, the computer is enabled to perform the method according to any one of the foregoing aspects or the possible implementations of the aspects.

According to a fourteenth aspect, a chip is provided. The chip includes a processor, configured to invoke a computer program from a memory and run the computer program, to enable a communication apparatus on which the chip is installed to perform the method according to any one of the foregoing aspects or the possible implementations of the aspects.

## BRIEF DESCRIPTION OF DRAWINGS

FIG. 1 is a diagram of a device-free sensing scenario according to this application;
FIG. 2 is a diagram of another device-free sensing scenario according to this application;
FIG. 3 is a diagram of a device-based sensing scenario according to this application;
FIG. 4 is a diagram of another device-based sensing scenario according to this application;
FIG. 5 is a diagram of receiving a signal by an antenna array according to this application;
FIG. 6 is a diagram of a wideband signal angle measurement solution according to this application;
FIG. 7 is a diagram of ambiguous angle measurement according to this application;
FIG. 8 is a schematic flowchart of an angle measurement method according to this application;
FIG. 9 is a diagram of a signal frequency band according to this application;
FIG. 10 is a schematic flowchart of an angle measurement method according to this application;
FIG. 11 is a schematic flowchart of an angle measurement method according to this application;

FIG. 12 is a schematic flowchart of an angle measurement method according to this application;

FIG. 13 is a block diagram of a communication apparatus according to an embodiment of this application;

FIG. 14 is a block diagram of another communication apparatus according to an embodiment of this application;

FIG. 15 is a diagram of a structure of a terminal device according to an embodiment of this application; and

FIG. 16 is a diagram of a structure of a network device according to an embodiment of this application.

## DESCRIPTION OF EMBODIMENTS

The following describes the technical solutions in embodiments of this application with reference to the accompanying drawings in embodiments of this application.

In the descriptions of this application, unless otherwise specified, "/" represents an "or" relationship between associated objects. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be understood that, in this application, descriptions similar to "in a case that...", "if...", "when...", "provided that...", and the like may be used interchangeably.

The technical solutions in embodiments of this application may be applied to various communication systems, for example, a long term evolution (long term evolution, LTE) system, a 5th generation (5th Generation, 5G) mobile communication system, new radio (New Radio, NR), and another mobile communication system that may appear in the future.

A terminal device in embodiments of this application may be user equipment (user equipment, UE), a station (station), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a large screen, a vehicle-mounted device, a wearable device, a terminal device in a 5G network, a terminal device in a future evolved public land mobile network (public land mobile network, PLMN), or the like. This is not limited in embodiments of this application.

A network device in embodiments of this application is a radio access network (radio access network, RAN) node (or device) that connects the terminal device to a wireless network, and may also be referred to as a base station. For example, the network device may be an evolved NodeB (evolved NodeB, eNodeB), a transmission reception point (transmission reception point, TRP), a next generation NodeB (next generation NodeB, gNB) in a 5G mobile communication system, a base station in a future mobile communication system or an access point (access point, AP) in a Wi-Fi system, a radio controller in a cloud radio access network (cloud radio access network, CRAN) scenario, a relay station, an access point, a vehicle-mounted device, a wearable device, or a network device in another future evolved communication system. For another example, the network device may alternatively be a module or a unit that completes some functions of a base station, for example, may be a central unit (central unit, CU) or a distributed unit (distributed unit, DU). A specific technology and a specific device form that are used by the network device are not limited in this application.

The technical solutions in embodiments of this application may be applied to a device-free (Device-free) sensing scenario and a device-based (Device-based) sensing scenario. Device-free sensing may also be referred to as sensing or passive sensing for short, and device-based sensing may also be referred to as positioning. The following separately describes the two scenarios by using examples with reference to the accompanying drawings.

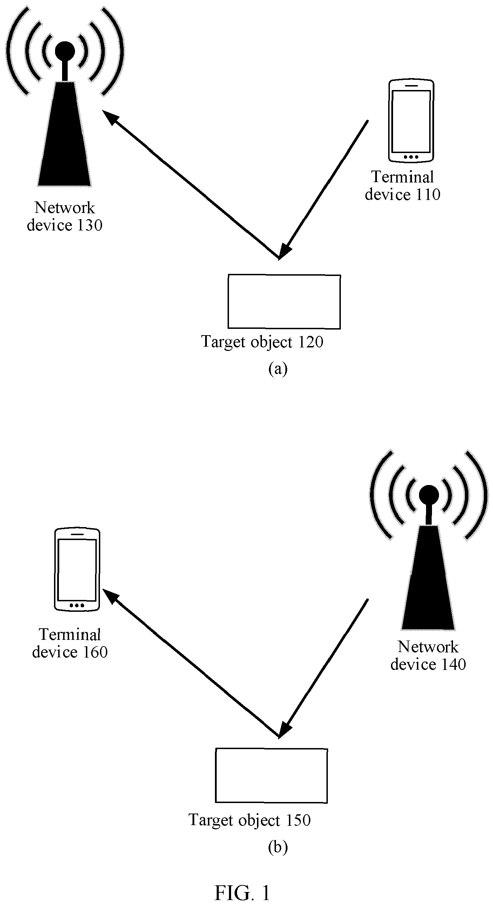

FIG. 1 is a diagram of a device-free sensing scenario applicable to this application. Refer to (a) in FIG. 1. A terminal device 110 sends a sensing signal, the sensing signal is received by a network device 130 after being reflected by a target object 120 (for example, a car), and the network device 130 may estimate a direction of arrival of the reflected signal based on the received sensing signal. Refer to (b) in FIG. 1. A network device 140 sends a sensing signal, the sensing signal is received by a terminal device 160 after being reflected by a target object 150 (for example, a car), and the terminal device 160 may estimate a direction of arrival of the reflected signal based on the received sensing signal.

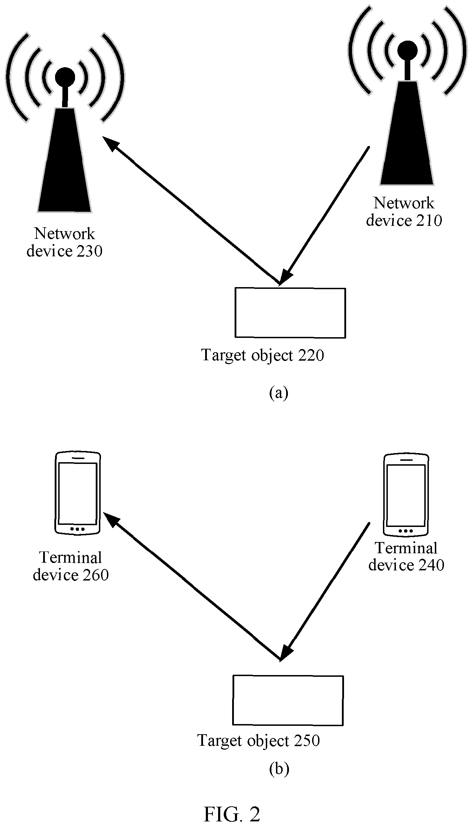

It should be understood that, a target object in the device-free sensing scenario, for example, the target object 120 and the target object 150 in FIG. 1, and a target object 220 and a target object 250 in FIG. 2, does not have a baseband function, cannot send or receive a signal, and can only reflect a signal. For example, the target object in the device-free sensing scenario may be a bicycle, a pedestrian, or a car without a baseband function.

FIG. 2 is a diagram of another device-free sensing scenario applicable to this application. Refer to (a) in FIG. 2. A network device 210 sends a sensing signal, the sensing signal is received by a network device 230 after being reflected by a target object 220 (for example, a car), and the network device 230 may estimate a direction of arrival of the reflected signal based on the received sensing signal. Refer to (b) in FIG. 2. A terminal device 240 sends a sensing signal, the sensing signal is received by a terminal device 260 after being reflected by a target object 250 (for example, a car), and the terminal device 260 may estimate a direction of arrival of the reflected signal based on the received sensing signal.

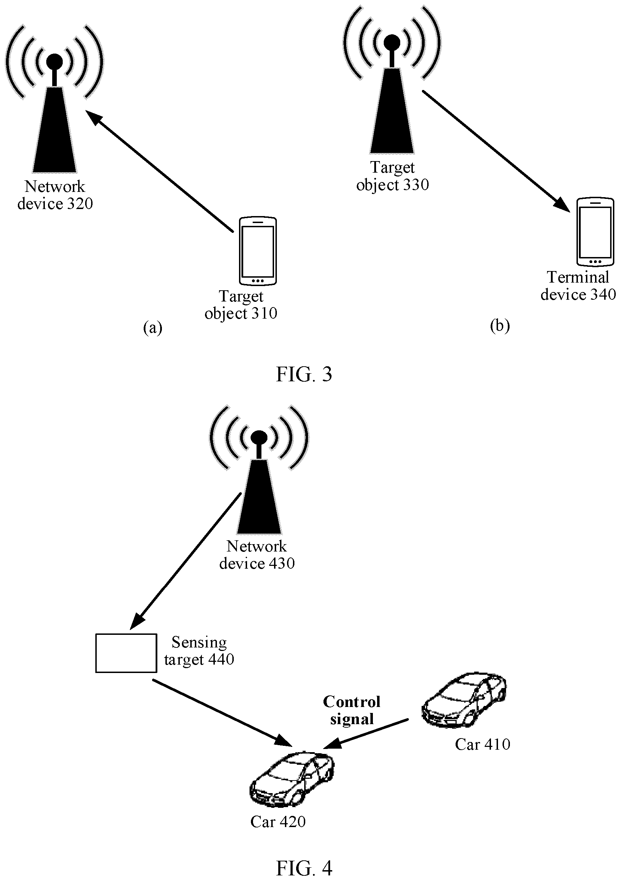

FIG. 3 is a diagram of a device-based sensing scenario applicable to this application. Refer to (a) in FIG. 3. A target object 310 (for example, a terminal device) sends a sensing signal, the sensing signal is received by a network device 320, and the network device 320 estimates a direction of arrival from the target object 310 to the network device 320 based on the received sensing signal. Refer to (b) in FIG. 3. A target object 330 (for example, a network device) sends a sensing signal, the sensing signal is received by a terminal device 340, and the terminal device 340 estimates a direction of arrival from the target object 330 to the terminal device 340 based on the received sensing signal.

It should be understood that, a target object in the device-based sensing scenario, for example, the target object 310 and the target object 330 in FIG. 3, has a baseband function, and may send and receive a signal. For example, the target object in the device-based sensing scenario may be a mobile phone, a base station, or a car having a baseband function.

In some embodiments, any one of the scenarios shown in FIG. 1 to FIG. 3 may further include a control node. The control node sends a control signal to a signal transmit end and/or a signal receive end, controls the signal transmit end to send a sensing signal, and/or controls the signal receive end to perform sensing, to finally obtain a direction of arrival from a target object to a corresponding node. For example, in the scenario shown in (a) in FIG. 1, the control node may send a control signal to the network device 130. After receiving the control signal, the network device 130 may indicate the terminal device 110 to send a sensing signal, to perform angle measurement based on the sensing signal. Alternatively, the control node may send a control signal to the terminal device 110. After receiving the control signal, the terminal device 110 may request the network device to perform angle measurement. After the network device 130 determines that angle measurement can be performed, the terminal device 110 sends a sensing signal, and the network device 130 performs angle measurement based on the sensing signal. Alternatively, the control node may send a control signal to both the network device 130 and the terminal device 110. After receiving the control signal, the terminal device 110 sends a sensing signal. Correspondingly, after receiving the control signal, the network device 130 performs angle measurement based on the sensing signal.

FIG. 4 is a diagram of a device-free sensing scenario including a control node applicable to this application. Refer to FIG. 4. A car 410 is a control node, expects to sense a road condition of a crossroad, and therefore sends a control signal to a car 420. After receiving the control signal, the car 420 cooperates with a network device 430 to complete sensing of the road condition of the crossroad, and obtain an estimated value of an angle of arrival (direction of arrival, DOA) of a sensing target of the crossroad. Specifically, after receiving the control signal, the car 420 negotiates with the network device 430, and the network device 430 sends a sensing signal. The sensing signal is received by the car 420 after being reflected by a sensing target 440. The car 420 estimates a direction of the reflected signal based on the received signal, and feeds back an estimated value to the car 410.

The following briefly describes a basic principle of angle measurement (that is, measuring a direction of arrival or DOA) of an antenna array. For convenience, a one-dimensional uniform array is used as an example for description.

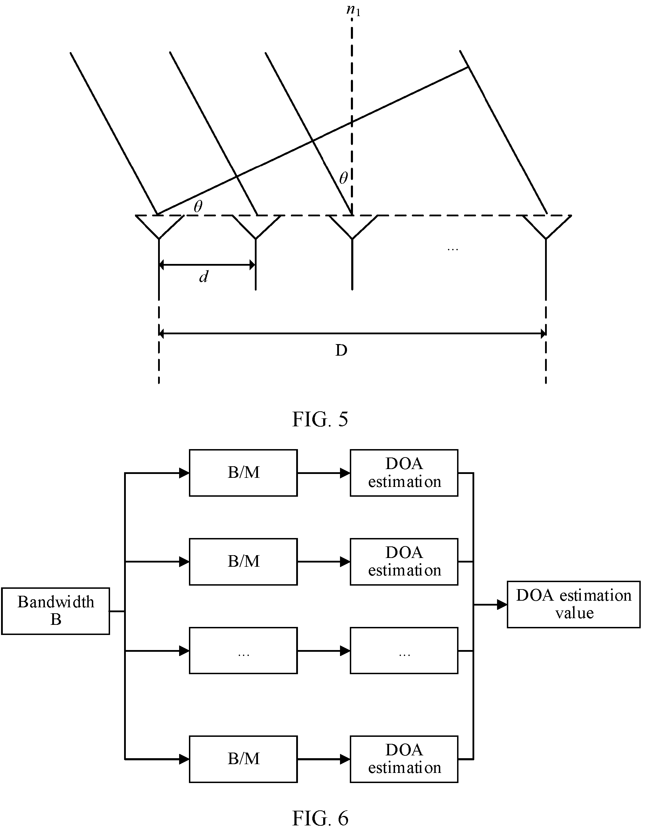

FIG. 5 is a diagram of receiving a signal (that is, a sensing signal) by an antenna array. Refer to FIG. 5. A spacing between antenna array elements is d, a diameter of an antenna array is D, a normal direction of the array is $n_1$, and $\theta$ is an included angle between a direction of arrival and $n_1$. A signal arrives at different antenna array elements at different moments, and a delay difference of the received signal between two adjacent antennas is $d\sin\theta$. Assuming that the received signal is a monophonic signal and a wavelength is $\lambda$, a phase difference of the received signal between two adjacent antennas may be represented as $\Delta\phi = 2\pi d\sin\theta/\lambda$. When a signal bandwidth is large, a corresponding maximum wavelength and a corresponding minimum wavelength in signal frequency components are $\lambda_{max}$ and $\lambda_{min}$ respectively. In this case, for two antennas at the beginning and the end of the antenna array, phase differences generated by different

frequency components are $\Delta\phi_{min} = 2\pi D\sin\theta/\lambda_{max}$ and $\Delta\phi_{max} = 2\pi D\sin\theta/\lambda_{min}$. If a difference between $\Delta\phi_{min}$ and $\Delta\phi_{max}$ exceeds $2\pi$, phase differences formed by all frequency components are distributed on 0 to $2\pi$, and phases of different frequency components cancel each other out, so that angle measurement cannot be performed.

To resolve the foregoing problem, for a large array wideband signal, the wideband signal may be divided into several narrowband signals that meet a narrowband condition ( $\left|\frac{D}{\lambda_{min}} - \frac{D}{\lambda_{max}}\right| \ll 1$ ) for angle measurement.

Specifically, refer to FIG. 6. Assuming that a bandwidth of a signal is B, the bandwidth may be evenly divided into M sub-bands, and a bandwidth of each sub-band is B/M. Because each sub-band satisfies the narrowband signal assumption, each sub-band may be processed separately to obtain a DOA estimation result, and then DOA estimation results of a plurality of sub-bands are fused to obtain a final DOA estimation value.

Antenna angle measurement involves two important parameters: a maximum unambiguous range of angle measurement (which may also be referred to as an angle measurement range for short) and an angle measurement resolution. A smallest spacing d between antenna array elements determines the maximum unambiguous range of angle measurement (which may also be referred to as the angle measurement range for short), and a diameter D of the antenna array determines the angle measurement resolution.

The maximum unambiguous range of angle measurement may be understood to be determined by sampling density of antenna array elements in space. An unambiguous range of angle measurement may be written in the following format:

$$\sin(\theta) \in \left[-\frac{\lambda}{2d}, \frac{\lambda}{2d}\right]$$

d represents the smallest spacing between antenna array elements, and $\lambda$ represents a wavelength of a signal. If $\xi = \sin(\theta)$ is defined, the maximum unambiguous range $\xi_{max} = \lambda/d$. For example, when a spacing between antenna array elements is a half wavelength (that is, $\frac{\lambda}{2}$), a range corresponding to angle measurement is $\theta \in [-90°, 90°]$.

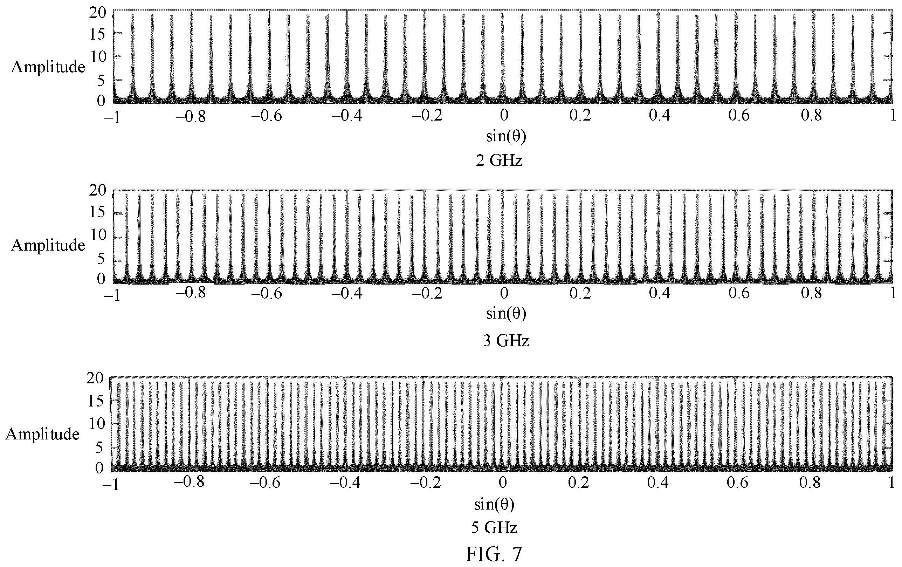

FIG. 7 is a diagram of ambiguous angle measurement. It is assumed that signals of 2 GHz, 3 GHz, and 5 GHz may be transmitted on one physical antenna, and the signals are incident from a direction $\sin(\theta) = 0$ (that is, a target is $\sin(\theta) = 0$). In this case, results corresponding to the three frequencies 2 GHz, 3 GHz, and 5 GHz each have a peak value at a position of $\sin(\theta) = 0$. This indicates that there is a real target at the position. However, each frequency corresponds to one maximum unambiguous range of angle measurement $\xi_{max} = \lambda/d$. In

addition, because different frequencies correspond to different wavelengths, different frequencies correspond to different maximum unambiguous ranges of angle measurement. It can be learned from FIG. 7 that, when $\sin(\theta) = 0.8$, peak values appear on the three frequencies at the same time. This means that the target at $\sin(\theta) = 0$ is ambiguous at $\sin(\theta) = 0.8$, and it is difficult to determine whether the target is from $\sin(\theta) = 0$ or $\sin(\theta) = 0.8$. This means that when $\sin(\theta) = 0$, the maximum unambiguous range of angle measurement is exceeded, and the target in the direction $\sin(\theta) = 0$ cannot be measured.

It may be understood that a larger maximum unambiguous range of angle measurement is more conducive to measuring a target, and the maximum unambiguous range of angle measurement is limited by the smallest spacing d between antenna array elements. Specifically, because $\xi_{max} = \lambda/d$, a smaller value of d indicates a larger unambiguous range of angle measurement. However, when a quantity of antenna array elements is fixed, a smaller value of d indicates a smaller diameter D of the antenna array, and the diameter D of the antenna array affects an angle measurement resolution $\Delta\theta$.

The angle measurement resolution $\Delta\theta$ is determined by the diameter of the antenna array and the wavelength, and may be represented in the following form:

$$\Delta\theta \propto \frac{\lambda}{D}$$

That is, $\Delta\theta$ is in direct proportion to $\frac{\lambda}{D}$. In other words, a shorter wavelength $\lambda$ indicates a higher angle measurement resolution, and a larger physical diameter D of the antenna array indicates a higher angle measurement resolution.

It can be learned that, when a quantity of antenna arrays is fixed, a smaller value of d indicates a larger maximum unambiguous range of angle measurement, and correspondingly indicates a smaller value of D and a lower angle measurement resolution. Therefore, when the quantity of antenna arrays is fixed, the angle measurement range and the angle measurement resolution cannot be both ensured.

In view of this, this application provides an angle measurement solution. In this solution, an angle measurement range can be expanded (that is, a maximum unambiguous range of angle measurement is expanded) while an angle measurement resolution is ensured. In addition, in this method, only a small quantity of frequency domain resources are used to expand the angle measurement range, so that resources can be saved.

The solution provided in this application relates to a first communication apparatus and a second communication apparatus. The first communication apparatus sends a sensing signal, and the second communication apparatus receives the sensing signal, and may perform angle measurement based on the sensing signal. In some embodiments of this application, a third communication apparatus may be further involved. The third communication apparatus may control the first communication apparatus to send the sensing signal, and control the second communication apparatus to receive the sensing signal and perform angle measurement based on the sensing signal.

For example, the first communication apparatus may be the terminal device 110 in (a) in FIG. 1, and the second communication apparatus may be the network device 130 in (a) in FIG. 1; or the first communication apparatus may be the network device 140 in (b) in FIG. 1, and the second communication apparatus may be the terminal device 160 in (b) in FIG. 1. Alternatively, the first communication apparatus may be the network device 210 in (a) in FIG. 2, and the second communication apparatus may be the network device 230 in (a) in FIG. 2; or the first communication apparatus may be the terminal device 240 in (b) in FIG. 2, and the second communication apparatus may be the terminal device 260 in (b) in FIG. 2. Alternatively, the first communication apparatus may be the target object 310 in (a) in FIG. 3, and the second communication apparatus may be the network device 320 in (a) in FIG. 3; or the first communication apparatus may be the target object 330 in (b) in FIG. 3, and the second communication apparatus may be the terminal device 340 in (b) in FIG. 3. The third communication apparatus may be the control node described above.

The following describes in detail the solution provided in this application with reference to corresponding flowcharts. It may be understood that, in the schematic flowcharts provided in this application, examples in which different communication apparatuses (for example, the first communication apparatus, the second communication apparatus, and the third communication apparatus) are used as execution bodies of the interaction illustration are mainly used to illustrate the method. However, the execution bodies of the interaction illustration are not limited in this application. For example, the communication apparatus (for example, the first communication apparatus, the second communication apparatus, and the third communication apparatus) in the schematic flowchart may alternatively be a chip, a chip system, or a processor that supports the communication apparatus in implementing the method, or may be a logical module or software that can implement all or some functions of the communication apparatus.

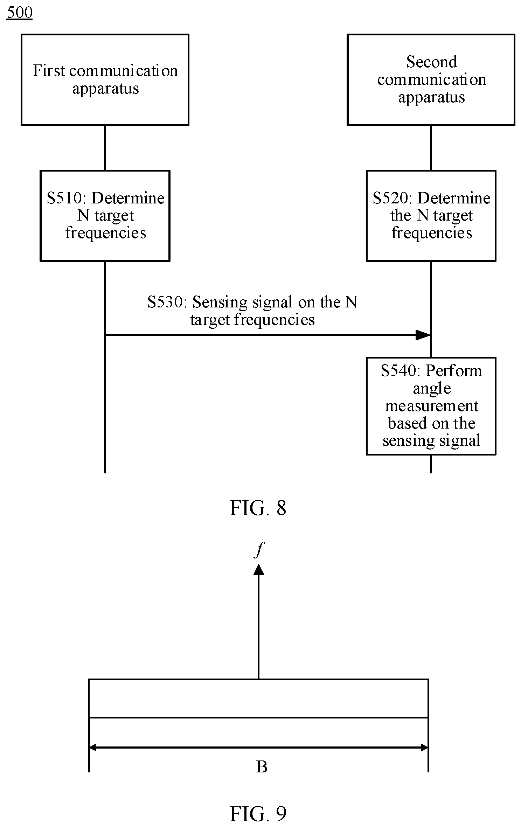

FIG. 8 is a schematic flowchart of an angle measurement method according to this application. The method 500 may include S510 to S540. The following describes the steps.

S510: A first communication apparatus determines N target frequencies.

S520: A second communication apparatus determines the N target frequencies.

Both the first communication apparatus and the second communication apparatus support the N target frequencies, the N target frequencies belong to a candidate frequency set, the candidate frequency set includes M candidate frequencies, and $1 < N < M$. It should be understood that the N target frequencies are N candidate frequencies in the M candidate frequencies. For other M-N candidate frequencies in the candidate frequency set, the first communication apparatus may support some or all of the other M-N candidate frequencies, or may support none of the other M-N candidate frequencies. The second communication apparatus is similar.

In addition, the N target frequencies meet the following condition 1 or condition 2.

Condition 1: A least common multiple of processed angle measurement ranges corresponding to the N target frequencies is greater than a preset angle measurement range.

Condition 2: A least common multiple of processed angle measurement ranges corresponding to the N target frequencies is greater than or equal to a least common multiple of processed angle measurement ranges corresponding to any N candidate frequencies in the candidate frequency set. It should be understood that the any N candidate frequencies herein refer to any N candidate frequencies supported by both the first communication apparatus and the second communication apparatus.

The processed angle measurement range is a positive integer.

For example, a processed angle measurement range corresponding to any one of the candidate frequencies is obtained by performing first processing on an angle measurement range corresponding to the candidate frequency.

It is assumed that the candidate frequency set is $\{f_1, f_2, \dots , f_M\}$, and wavelengths corresponding to the frequencies are respectively $\{\lambda_1, \lambda_2, \dots, \lambda_M\}$. When a smallest spacing between antenna array elements is $d$, it may be obtained, according to the formula $\xi_{max} = \lambda/d$, that the angle measurement range corresponding to $\{f_1, f_2, \dots , f_M\}$ is $\{\xi_{max}^1, \xi_{max}^2, \dots, \xi_{max}^M\} = \{\frac{\lambda_1}{d}, \frac{\lambda_2}{d}, \dots, \frac{\lambda_M}{d}\}$. First processing is performed on each value in $\{\xi_{max}^1, \xi_{max}^2, \dots, \xi_{max}^M\}$, to obtain $\{\xi_{max}'^1, \xi_{max}'^2, \dots, \xi_{max}'^M\}$. It may be understood that the processed angle measurement ranges corresponding to the N target frequencies are N values in $\{\xi_{max}'^1, \xi_{max}'^2, \dots, \xi_{max}'^M\}$. It should be noted that the smallest spacing $d$ between antenna array elements herein is a smallest spacing between antenna array elements of the second communication apparatus.

For example, first processing may include rounding, expanding, and/or reducing.

For example, each value in $\{\xi_{max}^1, \xi_{max}^2, \dots, \xi_{max}^M\}$ may be divided by an angle measurement resolution, and k decimal places are reserved for each obtained value, where k is an integer greater than or equal to 0. Then, each value obtained after the k decimal places are reserved is multiplied by $10^k$, and obtained values are $\{\xi_{max}'^{1}, \xi_{max}'^{2}, \dots, \xi_{max}'^{M}\}$. k is a positive integer.

In an example, an angle measurement resolution corresponding to any candidate frequency supported by both the first communication apparatus and the second communication apparatus in $\{f_1, f_2, \dots, f_M\}$ may be used as the angle measurement resolution used in the first processing.

For example, an angle measurement resolution corresponding to a largest candidate frequency that is supported by both the first communication apparatus and the second communication apparatus in $\{f_1, f_2, \dots, f_M\}$ may be used as the angle measurement resolution used in the first processing. Specifically, it is assumed that a maximum frequency in $\{f_1, f_2, \dots, f_M\}$ is $f_{max}$, and both the first communication apparatus and the second communication apparatus support $f_{max}$. According to $\lambda = \frac{c}{f}$, a wavelength $\lambda_{min} = \frac{c}{f_{max}}$ corresponding to $f_{max}$ may be obtained through calculation, where c represents a speed of light. Further, according to an angle measurement resolution $\Delta\theta = \frac{\lambda}{D}$, an angle measurement resolution $\Delta\theta = \lambda_{min}/D$ corresponding to $f_{max}$ may be obtained through calculation. It should be noted that D herein is a diameter of an antenna array of the second communication apparatus.

Based on this solution, after each value in $\{\xi_{max}^{1}, \xi_{max}^{2}, \dots, \xi_{max}^{M}\}$ is divided by the angle measurement resolution, precision of an obtained value is higher, so that it can be ensured that an effect of corresponding first processing is better.

For another example, an angle measurement resolution corresponding to a smallest candidate frequency that is supported by both the first communication apparatus and the second communication apparatus in $\{f_1, f_2, \dots, f_M\}$ may alternatively be used as the angle measurement resolution used in the first processing.

In an example, the preset angle measurement range is less than or equal to the angle measurement range corresponding to the candidate frequency set.

The angle measurement range corresponding to the candidate frequency set is a least common multiple of angle measurement ranges corresponding to the M candidate frequencies in the candidate frequency set, that is, the angle measurement range corresponding to the candidate frequency set is a least common multiple of $\{\xi_{max}^{1}, \xi_{max}^{2}, \dots, \xi_{max}^{M}\}$.

It should be understood that, during calculation of an angle measurement range, only an angle measurement range corresponding to a candidate frequency supported by both the first communication apparatus and the second communication apparatus in the candidate frequency set may be calculated, and an angle measurement range corresponding to a candidate frequency not supported by the first communication apparatus and the second communication apparatus is not calculated.

The condition 2 means that the least common multiple of the processed angle measurement ranges corresponding to the N target frequencies is greater than a least common multiple of processed angle measurement ranges corresponding to any other N candidate frequencies in the candidate frequency set.

Specifically, it is assumed that there are P solutions for selecting, from $\{f_1, f_2, \dots, f_M\}$. N candidate frequencies supported by both the first communication apparatus and the second communication apparatus. A least common multiple of processed angle measurement ranges corresponding to N candidate frequencies corresponding to each solution may be calculated. If a least common multiple obtained through calculation in a solution is the largest, N candidate frequencies corresponding to the solution are used as the N target frequencies.

For example, at least two candidate frequencies in the candidate frequency set are located in different frequency bands, or M candidate frequencies in the candidate frequency set are located in a same frequency band. For example, some of the M candidate frequencies belong to 3.5 GHz, and other frequencies belong to 5 GHz. In other words, this solution is applicable to hardware that supports a single frequency band and hardware that supports a plurality of frequency bands.

S530: The first communication apparatus sends a sensing signal to the second communication apparatus on the N target frequencies. Correspondingly, the second communication apparatus receives the sensing signal sent on the N target frequencies.

It should be understood that, in a device-free sensing scenario, the second communication apparatus receives a sensing signal reflected by a target object. In a device-based sensing scenario, the second communication apparatus receives a sensing signal sent by the first communication apparatus.

It should be further understood that the sensing signal in this application may be a reference signal in a specific format agreed upon by the first communication apparatus and the second communication apparatus. The reference signal may be used only for angle measurement, or the reference signal may be further used for another purpose.

In this application, that the first communication apparatus sends a sensing signal on any target frequency may be understood as a meaning thereof, or may be understood as that the first communication apparatus sends a sensing signal whose bandwidth is B by using the target frequency f as a center frequency. For example, refer to a diagram of a frequency band shown in FIG. 9. It should be understood that, when the sensing signal whose bandwidth is B is sent by using the target frequency f as the center frequency, the transmitted signal is required to meet a narrowband assumption condition $\left|\frac{D}{\lambda_{min}} - \frac{D}{\lambda_{max}}\right| \ll 1$, for example, meet $\left|\frac{D}{\lambda_{min}} - \frac{D}{\lambda_{max}}\right| < 0.1$. Herein, D represents a diameter of an antenna array of the second communication apparatus, that is, a spacing between two antennas that are farthest from each other. $\lambda_{min}$ and $\lambda_{max}$ respectively represent a maximum wavelength and a minimum wavelength, $\lambda_{min} = c/f_{max}$, $\lambda_{max} = c/f_{min}$, $f_{max} = f + B/2$, and $f_{min} = f - B/2$.

S540: The second communication apparatus performs angle measurement based on the sensing signal.

In the device-based sensing scenario, the second communication apparatus may estimate, based on the received sensing signal, a DOA of the sensing signal sent by the first communication apparatus.

It should be understood that, in the device-free sensing scenario, the second communication apparatus may estimate, based on the received sensing signal, a DOA of the sensing signal reflected by the target object.

In S540, the second communication apparatus may perform, based on the received sensing signal, angle estimation on sensing signals respectively corresponding to the N target frequencies. Then, the second communication apparatus may combine angle estimation values respectively corresponding to the N target frequencies, and remove a false target, to obtain a final angle estimation value.

For example, a classical DOA estimation method may be used for angle estimation, including spatial matched filtering, multiple signal classification (multiple signal classification, MUSIC), estimation of signal parameters using rotational invariance techniques (estimation of signal parameters using rotational invariance techniques, ESPRIT), super-resolution method, and the like.

For example, fusion may be performed on the angle estimation values obtained based on the plurality of frequencies based on the following model:

$$g_{fi}(\theta) > A_{threshold}$$

$A_{threshold}$ is a given threshold, and $g_{fi}(\theta)$ represents an amplitude response of DOA estimation on a frequency fi and in a direction $\theta$.

When $g_{f1}(\theta)$, $g_{f2}(\theta)$, ..., and $g_{fN}(\theta)$ are all greater than the given threshold $A_{threshold}$, or when most (for example, 80%) of $g_{f1}(\theta)$, $g_{f2}(\theta)$, ... , and $g_{fN}(\theta)$ are greater than the given threshold $A_{threshold}$, it is considered that a target exists in the direction $\theta$.

In conclusion, according to the angle measurement method provided in this application, a proper frequency design is used. To be specific, a sensing signal is sent on N target frequencies that meet the condition 1 or the condition 2 in the M candidate frequencies, and angle measurement is performed in combination with the sensing signal on the N target frequencies. An angle measurement range that can be obtained is a least common multiple of angle measurement ranges corresponding to the N target frequencies. When hardware resources are the same, compared with a solution in which no frequency selection is performed and a signal on the M candidate frequencies is used for angle measurement (the angle measurement range is an angle measurement range corresponding to a smallest frequency in the M candidate frequencies), this solution can save frequency resources while ensuring an angle measurement resolution, and can expand an angle measurement range, that is, expand a maximum unambiguous range of angle measurement. In addition, because this solution does not need to ensure the maximum unambiguous range of angle measurement by using a small physical antenna spacing, mutual coupling of signals between antennas can be reduced.

In addition, the antenna array of the second communication apparatus in this application may be a uniform array, or may be a sparse array (for example, a coprime array, a nested array, or a minimum redundant array). Because the solution in this application can support angle measurement of the sparse array, a quantity of channels can be effectively reduced, and system power consumption can be reduced.

For the method 500, in an implementation, one of the first communication apparatus and the second communication apparatus may determine the N target frequencies, and then notify the other of information about the N target frequencies. In this way, the other may determine the N target frequencies.

In another implementation, a third communication apparatus may determine the N target frequencies, and then notify the first communication apparatus and the second communication apparatus of information about the N target frequencies. In this way, the first communication apparatus and the second communication apparatus may determine the N target frequencies.

The following describes the two implementations in detail with reference to the accompanying drawings.

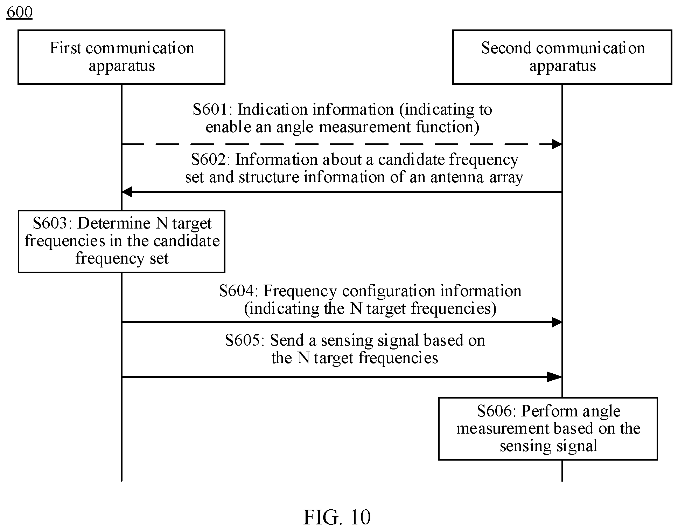

FIG. 10 is a schematic flowchart of an angle measurement method according to this application. In the method 600, a first communication apparatus may independently determine N target frequencies, and after determining the N target frequencies, the first communication apparatus may notify a second communication apparatus of information about the N target frequencies. The method 600 may include one or more steps in S601 to S606. The following describes the steps in the method 600.

S601: The first communication apparatus sends indication information to the second communication apparatus. Correspondingly, the second communication apparatus receives the indication information from the first communication apparatus. The indication information indicates to enable an angle measurement function.

This step is an optional step. If step S601 exists, after receiving the indication information, the second communication apparatus may enable an antenna array to receive a signal, and a baseband part may invoke a corresponding angle measurement processing algorithm, to obtain an angle estimation value. In addition, the second communication apparatus performs S602 based on triggering of the indication information. If step S601 does not exist, the second communication apparatus may enable an antenna array to receive a signal when the second communication apparatus needs to perform angle measurement, and a baseband part invokes a corresponding angle measurement processing algorithm, and performs S602.

For example, the angle measurement function may be a wideband array angle measurement function.

For example, based on specific forms of the first communication apparatus and the second communication apparatus, the indication information may be sent by using a radio resource control (radio resource control, RRC) message, a medium access control control element (medium access control control element, MAC CE), downlink control information (downlink control information, DCI), or uplink control information (uplink control information, UCI). For example, when the first communication apparatus is a network device, and the second communication apparatus is a terminal device, the indication information may be sent by using an RRC message, a MAC CE, or DCI. For another example, when the first communication apparatus is a terminal device, and the second communication apparatus is a network device, the indication information may be sent by using an RRC message, a MAC CE, or UCI.

S602: The second communication apparatus sends information about a candidate frequency set and array structure information of the second communication apparatus to the first communication apparatus. Correspondingly, the first communication apparatus receives the information about the candidate frequency set from the second communication apparatus.

The information about the candidate frequency set indicates the foregoing candidate frequency set. It should be noted that in the method 600, M candidate frequencies in the candidate frequency set are some or all frequencies supported by the second communication apparatus.

The array structure information is used to determine an angle measurement range corresponding to the candidate frequency. For example, the array structure information may indicate a smallest spacing d between antenna array elements in the antenna array, and the first communication apparatus may determine, based on the smallest spacing d between antenna array elements of the second communication apparatus, an angle measurement range corresponding to any candidate frequency.

For example, if a diameter D of the antenna array of the second communication apparatus needs to be used in S603, the array structure information may further include the diameter D of the antenna array of the second communication apparatus.

It should be understood that the information about the candidate frequency set and the array structure information of the second communication apparatus may be sent by using a same message, or may be sent by using different messages. A sending sequence between the information about the candidate frequency set and the array structure information of the second communication apparatus is not limited in this application.

For example, based on specific forms of the first communication apparatus and the second communication apparatus, the information about the candidate frequency set and the array structure information of the second communication apparatus may be sent by using an RRC message, a MAC CE, DCI, or UCI. For example, when the first communication apparatus is a network device, and the second communication apparatus is a terminal device, the information about the candidate frequency set or the array structure information of the second communication apparatus may be sent by using an RRC message, a MAC CE, or UCI. For another example, when the first communication apparatus is a terminal device, and the second communication apparatus is a network device, the information about the candidate frequency set or the array structure information of the second communication apparatus may be sent by using an RRC message, a MAC CE, or DCI.

S603: The first communication apparatus determines N target frequencies from the candidate frequency set.

For example, the first communication apparatus may first determine candidate frequencies (assuming that there are P candidate frequencies, where P is greater than or equal to N and less than or equal to M) supported by the first communication apparatus in the candidate frequency set, and then the first communication apparatus may calculate processed angle measurement ranges respectively corresponding to the P candidate frequencies. For example, the first communication apparatus may first calculate angle measurement ranges respectively corresponding to the P candidate frequencies, and then perform first processing on the angle measurement ranges to obtain the processed angle measurement ranges respectively corresponding to the P candidate frequencies. Finally, the first communication apparatus may select, from the P processed angle measurement ranges, N processed angle measurement ranges that meet the foregoing condition 1 or condition 2, and N candidate frequencies corresponding to the N processed angle measurement ranges are the N target frequencies.

It should be understood that, for how to determine the N target frequencies from the candidate frequency set, refer to corresponding descriptions in the method 500.

S604: The first communication apparatus sends frequency configuration information to the second communication apparatus. Correspondingly, the second communication apparatus receives the frequency configuration information from the first communication apparatus. The frequency configuration information indicates the N target frequencies.

That is, after determining the N target frequencies, the first communication apparatus feeds back the N target frequencies to the second communication apparatus. In this way, the second communication apparatus may determine the N target frequencies.

For example, based on specific forms of the first communication apparatus and the second communication apparatus, the frequency configuration information may be sent by using an RRC message, a MAC CE, DCI, or UCI. For example, when the first communication apparatus is a network device, and the second communication apparatus is a terminal device, the frequency configuration information may be sent by using an RRC message, a MAC CE, or DCI. For another example, when the first communication apparatus is a terminal device, and the second communication apparatus is a network device, the frequency configuration information may be sent by using an RRC message, a MAC CE, or UCI.

S605: The first communication apparatus sends a sensing signal on the N target frequencies. Correspondingly, the second communication apparatus receives the sensing signal sent on the N target frequencies.

S606: The second communication apparatus performs angle measurement based on the sensing signal.

S605 and S606 are the same as S530 and S540. For details, refer to S530 and S540.

In conclusion, according to the angle measurement method provided in this application, the first communication apparatus determines and feeds back, to the second communication apparatus, N target frequencies that meet the condition 1 or the condition 2 in the M candidate frequencies, so that the second communication apparatus can perform angle measurement based on the sensing signal sent by the first communication apparatus on the N target frequencies.

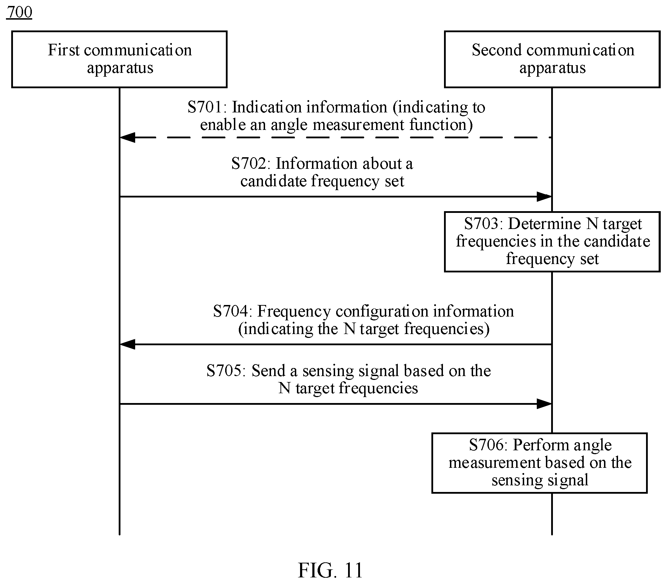

FIG. 11 is a schematic flowchart of another angle measurement method according to this application. In the method 700, a second communication apparatus may independently determine N target frequencies, and after determining the N target frequencies, the second communication apparatus may notify a first communication apparatus of information about the N target frequencies. The method 700 may include one or more steps in S701 to S706. The following describes the steps in the method 700.

S701: The second communication apparatus sends indication information to the first communication apparatus. Correspondingly, the first communication apparatus receives the indication information from the second communication apparatus. The indication information indicates to enable an angle measurement function.

This step is an optional step. If step S701 exists, the first communication apparatus may perform S702 after receiving the indication information. If step S701 does not exist, the first communication apparatus may perform S702 when the first communication apparatus needs the second communication apparatus to perform angle measurement.

For example, the angle measurement function may be a wideband array angle measurement function.

For example, based on specific forms of the first communication apparatus and the second communication apparatus, the indication information may be sent by using an RRC message, a MAC CE, DCI, or UCI. For example, when the first communication apparatus is a network device, and the second communication apparatus is a terminal device, the indication information may be sent by using an RRC message, a MAC CE, or UCI. For another example, when the first communication apparatus is a terminal device, and the second communication apparatus is a network device, the indication information may be sent by using an RRC message, a MAC CE, or DCI.

S702: The first communication apparatus sends information about a candidate frequency set to the second communication apparatus. Correspondingly, the second communication apparatus receives the information about the candidate frequency set from the first communication apparatus. The information about the candidate frequency set indicates the candidate frequency set in the method 500.

It should be noted that in the method 700, M candidate frequencies in the candidate frequency set are some or all frequencies supported by the first communication apparatus.

For example, based on specific forms of the first communication apparatus and the second communication apparatus, the information about the candidate frequency set may be sent by using an RRC message, a MAC CE, DCI, or UCI. For example, when the first communication apparatus is a network device and the second communication apparatus is a terminal device, the information about the candidate frequency set may be sent by using an RRC message, a MAC CE, or DCI. For another example, when the first communication apparatus is a terminal device and the second communication apparatus is a network device, the information about the candidate frequency set may be sent by using an RRC message, a MAC CE, or UCI.

S703: The second communication apparatus determines N target frequencies from the candidate frequency set.

For example, the second communication apparatus may first determine candidate frequencies (assuming that there are P candidate frequencies, where P is greater than or equal to N and less than or equal to M) supported by the second communication apparatus in the M candidate frequencies, and then the second communication apparatus may calculate processed angle measurement ranges respectively corresponding to the P candidate frequencies. For example, the second communication apparatus may first calculate angle measurement ranges respectively corresponding to the P candidate frequencies, and then perform first processing on the angle measurement ranges to obtain the processed angle measurement ranges respectively corresponding to the P candidate frequencies. Finally, the second communication apparatus may select, from the P processed angle measurement ranges, N processed angle measurement ranges that meet the foregoing condition 1 or condition 2, and N candidate frequencies corresponding to the N processed angle measurement ranges are the N target frequencies.

It should be understood that, for how to determine the N target frequencies from the candidate frequency set, refer to corresponding descriptions in the method 500.

S704: The second communication apparatus sends frequency configuration information to the first communication apparatus. Correspondingly, the first communication apparatus receives the frequency configuration information from the second communication apparatus. The frequency configuration information indicates the N target frequencies.

That is, after determining the N target frequencies, the second communication apparatus feeds back the N target frequencies to the first communication apparatus. In this way, the first communication apparatus may determine the N target frequencies.

For example, based on specific forms of the first communication apparatus and the second communication apparatus, the frequency configuration information may be sent by using an RRC message, a MAC CE, DCI, or UCI. For example, when the first communication apparatus is a network device, and the second communication apparatus is a terminal device, the frequency configuration information may be sent by using an RRC message, a MAC CE, or UCI. For another example, when the first communication apparatus is a terminal device, and the second communication apparatus is a network device, the frequency configuration information may be sent by using an RRC message, a MAC CE, or DCI.

S705: The first communication apparatus sends a sensing signal on the N target frequencies. Correspondingly, the second communication apparatus receives the sensing signal sent on the N target frequencies.

S706: The second communication apparatus performs angle measurement based on the sensing signal.

S705 and S706 are the same as S530 and S540. For details, refer to S530 and S540.

In conclusion, according to the angle measurement method provided in this application, the second communication apparatus determines and feeds back, to the first communication apparatus, N target frequencies that meet the condition 1 or the condition 2 in the M candidate frequencies, so that the first communication apparatus can send the sensing signal on the N target frequencies, and the second communication apparatus can perform angle measurement based on the sensing signal.

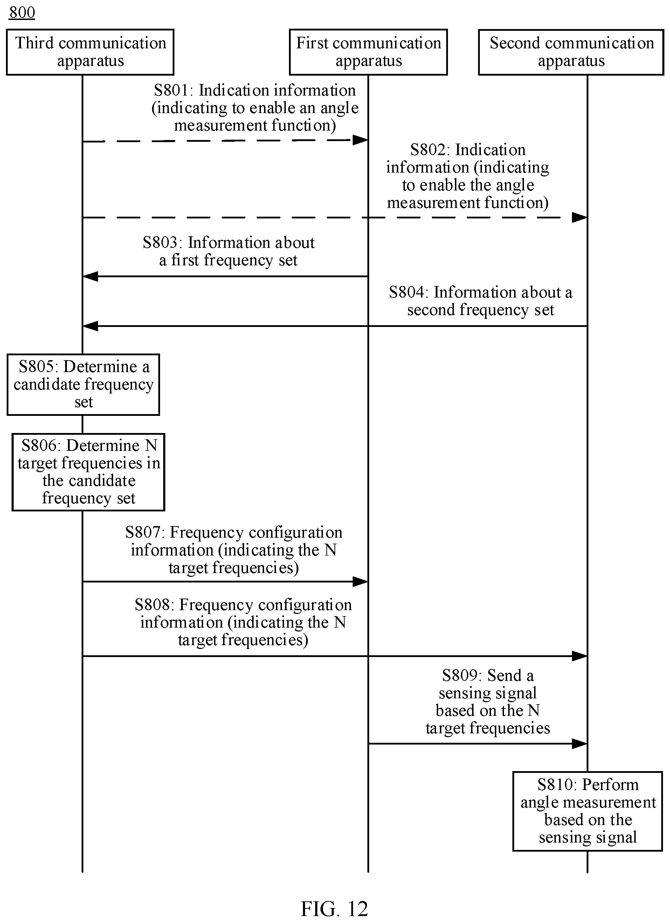

FIG. 12 is a schematic flowchart of still another angle measurement method according to this application. In the method 800, a third communication apparatus may independently determine N target frequencies, and after determining the N target frequencies, the third communication apparatus may notify a first communication apparatus and a second communication apparatus of information about the N target frequencies. The method 800 may include one or more steps in S801 to S810. The following describes the steps in the method 800.

S801: The third communication apparatus sends indication information to the first communication apparatus. Correspondingly, the first communication apparatus receives the indication information from the third communication apparatus. The indication information indicates to enable an angle measurement function.

This step is an optional step. If step S801 exists, the first communication apparatus may perform S803 after receiving the indication information. If step S802 does not exist, the first communication apparatus may perform S803 when the first communication apparatus needs the second communication apparatus to perform angle measurement.

For example, the angle measurement function may be a wideband array angle measurement function.

S802: The third communication apparatus sends the indication information to the second communication apparatus. Correspondingly, the second communication apparatus receives the indication information from the third communication apparatus.

This step is an optional step. If step S801 exists, after receiving the indication information, the second communication apparatus may enable an antenna array to receive a signal, and a baseband part may invoke a corresponding angle measurement processing algorithm, to obtain an angle estimation value. In addition, the second communication apparatus performs S804 based on triggering of the indication information. If step S802 does not exist, the second communication apparatus may enable an antenna array to receive a signal when the second communication apparatus needs to perform angle measurement, and a baseband part invokes a corresponding angle measurement processing algorithm, and performs S804.

For example, the angle measurement function may be a wideband array angle measurement function.

It should be understood that the indication information sent by the third communication apparatus to the first communication apparatus and the second communication apparatus may be the same or may be different. For example, the indication information sent by the third communication apparatus to the first communication apparatus is first indication information, and the indication information sent by the third communication apparatus to the second communication apparatus is second indication information. A difference between the first indication information and the second indication information lies in that the first indication information may include content used by the first communication apparatus to learn that a destination end of the first indication information is the first communication apparatus, for example, may include an identifier of the first communication apparatus; and the second indication information may include content used by the second communication apparatus to learn that a destination end of the second indication information is the second communication apparatus, for example, may include an identifier of the second communication apparatus.

For example, based on specific forms of the first communication apparatus, the second communication apparatus, and the third communication apparatus, the indication information (for example, the first indication information or the second indication information) may be sent by using an RRC message, a MAC CE, DCI, or UCI. For example, when the third communication apparatus is a network device, and the first communication apparatus is a terminal device, the first indication information may be sent by using an RRC message, a MAC CE, or DCI. Alternatively, when the third communication apparatus is a terminal device, and the first communication apparatus is a network device, the first indication information may be sent by using an RRC message, a MAC CE, or UCI. For another example, when the third communication apparatus is a network device, and the second communication apparatus is a terminal device, the second indication information may be sent by using an RRC message, a MAC CE, or DCI. Alternatively, when the third communication apparatus is a terminal device, and the second communication apparatus is a network device, the second indication information may be sent by using an RRC message, a MAC CE, or UCI.

It should be understood that an execution sequence of S801 and S802 is not limited in this application.

S803: The first communication apparatus sends information about a first frequency set to the third communication apparatus. Correspondingly, the third communication apparatus receives the information about the first frequency set from the first communication apparatus.

The information about the first frequency set indicates the first frequency set, and the first frequency set includes some or all frequencies supported by the first communication apparatus.

For example, based on specific forms of the third communication apparatus and the first communication apparatus, the information about the first frequency set may be sent by using an RRC message, a MAC CE, DCI, or UCI. For example, when the third communication apparatus is a network device, and the first communication apparatus is a terminal device, the information about the first frequency set may be sent by using an RRC message, a MAC CE, or UCI. For another example, when the third communication apparatus is a terminal device, and the first communication apparatus is a network device, the information about the first frequency set may be sent by using an RRC message, a MAC CE, or DCI.

S804: The second communication apparatus sends information about a second frequency set to the third communication apparatus. Correspondingly, the third communication apparatus receives the information about the second frequency set from the second communication apparatus.

The information about the second frequency set indicates the second frequency set, and the second frequency set includes some or all frequencies supported by the second communication apparatus.

For example, based on specific forms of the third communication apparatus and the second communication apparatus, the information about the second frequency set may be sent by using an RRC message, a MAC CE, DCI, or UCI. For example, when the third communication apparatus is a network device, and the first communication apparatus is a terminal device, the information about the second frequency set may be sent by using an RRC message, a MAC CE, or UCI. For another example, when the third communication apparatus is a terminal device, and the first communication apparatus is a network device, the information about the second frequency set may be sent by using an RRC message, a MAC CE, or DCI.

It should be understood that an execution sequence of S802 and S803 and an execution sequence of S803 and S804 are not limited in this application.

S805: The third communication apparatus determines a candidate frequency set based on the first frequency set and the second frequency set.

M frequencies in the candidate frequency set belong to both the first frequency set and the second frequency set.

S806: The third communication apparatus determines N target frequencies in the candidate frequency set.

For example, the third communication apparatus may first calculate processed angle measurement ranges respectively corresponding to the M candidate frequencies. For example, the third communication apparatus may first calculate angle measurement ranges respectively corresponding to the M candidate frequencies, and then perform first processing on the angle measurement ranges to obtain the processed angle measurement ranges respectively corresponding to the M candidate frequencies. Finally, the third communication apparatus may select, from the M processed angle measurement ranges, N processed angle measurement ranges that meet the foregoing condition 1 or condition 2, and N candidate frequencies corresponding to the N processed angle measurement ranges are the N target frequencies.

It should be understood that, for how to determine the N target frequencies from the candidate frequency set, refer to corresponding descriptions in the method 500.

S807: The third communication apparatus sends frequency configuration information to the first communication apparatus. Correspondingly, the first communication apparatus receives the frequency configuration information from the third communication apparatus.

S808: The third communication apparatus sends the frequency configuration information to the second communication apparatus. Correspondingly, the second communication apparatus receives the frequency configuration information from the third communication apparatus.

The frequency configuration information indicates the N target frequencies.

Specifically, after determining the N target frequencies, the third communication apparatus may feed back the N target frequencies to the first communication apparatus and the second communication apparatus by using the frequency configuration information. In this way, the first communication apparatus and the second communication apparatus may determine the N target frequencies.

For example, if the third communication apparatus is a network device, and the first communication apparatus is a terminal device, the third communication apparatus may send the frequency configuration information by using an RRC message, a MAC CE, or DCI. If the third communication apparatus is a terminal device, and the first communication apparatus is a network device, the third communication apparatus may send the frequency configuration information by using an RRC message, a MAC CE, or UCI.

For example, if the third communication apparatus is a network device, and the second communication apparatus is a terminal device, the third communication apparatus may send the frequency configuration information by using an RRC message, a MAC CE, or DCI. If the third communication apparatus is a terminal, and the second communication apparatus is a network device, the third communication apparatus may send the frequency configuration information by using an RRC message, a MAC CE, or UCI.

It should be understood that, an execution sequence of S807 and S808 is not limited in this application.

It should be further understood that the frequency configuration information sent by the third communication apparatus to the first communication apparatus and the second communication apparatus may be the same or may be different. Sending of the frequency configuration information is similar to sending of the indication information in S801 and S802. For details, refer to descriptions of sending of the indication information in S801 and S802. Details are not described herein again.

S809: The first communication apparatus sends a sensing signal on the N target frequencies. Correspondingly, the second communication apparatus receives the sensing signal sent on the N target frequencies.

S810: The second communication apparatus performs angle measurement based on the sensing signal.

S809 and S810 are the same as S530 and S540. For details, refer to S530 and S540.

In conclusion, according to the angle measurement method provided in this application, the third communication apparatus determines and feeds back, to the first communication apparatus and the second communication apparatus, N target frequencies that meet the condition 1 or the condition 2 in the M candidate frequencies, so that the first communication apparatus can send the sensing signal on the N target frequencies, and the second communication apparatus can perform angle measurement based on the sensing signal.

The foregoing describes the method embodiments provided in this application, and the following describes apparatus embodiments provided in this application. It should be understood that descriptions of apparatus embodiments correspond to the descriptions of the method embodiments. Therefore, for content that is not described in detail, refer to the method embodiments. For brevity, details are not described herein again.

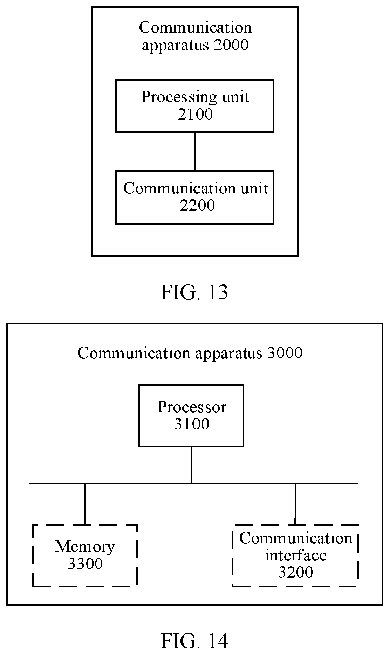

FIG. 13 is a block diagram of a communication apparatus according to an embodiment of this application. As shown in FIG. 13, the communication apparatus 2000 may include a processing unit 2100 and a communication unit 2200. The processing unit 2100 may implement a corresponding processing function, for example, determine N target frequencies. The communication unit 2200 may implement a corresponding communication function. The communication function may be an internal communication function of the communication apparatus 2000, or may be a communication function between the communication apparatus 2000 and another apparatus. The communication unit 2200 may also be referred to as a communication interface or a transceiver unit. Optionally, the communication apparatus 2000 may further include a storage unit. The storage unit may be configured to store instructions and/or data. The processing unit 2100 may read the instructions and/or the data in the storage unit, to enable the apparatus to implement the foregoing method embodiments.

In a possible design, the communication apparatus 2000 may be the first communication apparatus in any one of the method embodiments, or may be a module or a chip used in the first communication apparatus. The communication apparatus 2000 may be configured to perform steps or procedures performed by the first communication apparatus in any one of the foregoing method embodiments.

Specifically, the processing unit 2100 is configured to determine N target frequencies. The communication unit 2200 is configured to send a sensing signal on the N target frequencies, where the sensing signal is used by a second communication apparatus to perform angle measurement. The N target frequencies belong to a candidate frequency set, the candidate frequency set includes M candidate frequencies, $1<N<M$, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, where the processed angle measurement range is a positive integer.

Optionally, a processed angle measurement range corresponding to any one of the candidate frequencies is obtained by performing first processing on an angle measurement range corresponding to the candidate frequency, and performing first processing on the angle measurement range corresponding to the candidate frequency includes: reserving k decimal places for a value obtained by dividing the angle measurement range corresponding to the candidate frequency by an angle measurement resolution, to obtain a first value, where k is an integer greater than or equal to 0; multiplying the first value by $10^k$ to obtain the processed angle measurement range corresponding to the candidate frequency.

Optionally, the communication unit 2200 is further configured to receive frequency configuration information from the second communication apparatus, or receive the frequency configuration information from a third communication apparatus. The frequency configuration information indicates the N target frequencies.

Optionally, the communication unit 2200 is further configured to send information about the candidate frequency set to the second communication apparatus, where the communication apparatus 2000 supports any candidate frequency in the candidate frequency set. Alternatively, the communication unit 2200 is further configured to send information about a first frequency set to the third communication apparatus, where the communication apparatus 2000 supports any frequency in the first frequency set, the first frequency set includes any candidate frequency in the candidate frequency set, and both the communication apparatus 2000 and the second communication apparatus support any candidate frequency in the candidate frequency set.

Optionally, the communication unit 2200 is further configured to receive indication information from the second communication apparatus; or receive the indication information from the third communication apparatus. The indication information indicates to enable an angle measurement function.

Optionally, the communication unit 2200 is further configured to send frequency configuration information to the second communication apparatus, where the frequency configuration information indicates the N target frequencies.

Optionally, the communication unit 2200 is further configured to receive information about the candidate frequency set from the second communication apparatus and array structure information of the second communication apparatus, where the array structure information indicates a smallest spacing between array elements in an antenna array, the array structure information is used to determine the angle measurement range corresponding to the candidate frequency, and the second communication apparatus supports any candidate frequency in the candidate frequency set.

Optionally, the communication unit 2200 is further configured to send indication information to the second communication apparatus, where the indication information indicates to enable an angle measurement function.

Optionally, at least two candidate frequencies in the candidate frequency set are located in different frequency bands.

In a possible design, the communication apparatus 2000 may be the second communication apparatus in any one of the method embodiments, or may be a module or a chip used in the second communication apparatus. The communication apparatus 2000 may be configured to perform steps or procedures performed by the second communication apparatus in any one of the foregoing method embodiments.

Specifically, the processing unit 2100 is configured to determine N target frequencies. The communication unit 2200 is configured to receive a sensing signal from a first communication apparatus on the N target frequencies. The processing unit 2100 is further configured to perform angle measurement based on the sensing signal. The N target frequencies belong to a candidate frequency set, the candidate frequency set includes M candidate frequencies, $1<N<M$, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, where the processed angle measurement range is a positive integer.

Optionally, a processed angle measurement range corresponding to any one of the candidate frequencies is obtained by performing first processing on an angle measurement range corresponding to the candidate frequency, and performing first processing on the angle measurement range corresponding to the candidate frequency includes: reserving k decimal places for a value obtained by dividing the angle measurement range corresponding to the candidate frequency by an angle measurement resolution, to obtain a first value, where k is a positive integer greater than or equal to 0; and

multiplying the first value by $10^k$ to obtain the processed angle measurement range corresponding to the candidate frequency.

Optionally, the communication unit 2200 is further configured to send frequency configuration information to the first communication apparatus, where the frequency configuration information indicates the N target frequencies.

Optionally, the communication unit 2200 is further configured to receive information about the candidate frequency set from the first communication apparatus, where the first communication apparatus supports any candidate frequency in the candidate frequency set.

Optionally, the communication unit 2200 is further configured to send indication information to the first communication apparatus, where the indication information indicates to enable an angle measurement function.

Optionally, the communication unit 2200 is further configured to receive frequency configuration information from the first communication apparatus, or receive the frequency configuration information from a third communication apparatus. The frequency configuration information indicates the N target frequencies.

Optionally, the communication unit 2200 is further configured to send information about the candidate frequency set and array structure information of the communication apparatus 2000 to the first communication apparatus, where the array structure information is used to determine the angle measurement range corresponding to the candidate frequency, and the communication apparatus 2000 supports any candidate frequency in the candidate frequency set. Alternatively, the communication apparatus 2000 sends information about a second frequency set and the array structure information to the third communication apparatus, where the communication apparatus 2000 supports any frequency in the second frequency set, the second frequency set includes any candidate frequency in the candidate frequency set, and both the first communication apparatus and the communication apparatus 2000 support any candidate frequency in the candidate frequency set.

Optionally, the communication unit 2200 is further configured to receive indication information from the first communication apparatus, or receive the indication information from the third communication apparatus, where the indication information indicates to enable an angle measurement function.

Optionally, at least two candidate frequencies in the candidate frequency set are located in different frequency bands.

In a possible design, the communication apparatus 2000 may be the third communication apparatus in any one of the method embodiments, or may be a module or a chip used in the third communication apparatus. The communication apparatus 2000 may be configured to perform steps or procedures performed by the third communication apparatus in any one of the foregoing method embodiments.

Specifically, the processing unit 2100 is configured to: determine a candidate frequency set, where the candidate frequency set includes M candidate frequencies, and both a first communication apparatus and a second communication apparatus support any candidate frequency in the candidate frequency set; and determine N target frequencies in the candidate frequency set, where 1<N<M, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, where the processed angle measurement range is a positive integer. The communication unit 2200 is configured to send frequency configuration information to the first communication apparatus and the second communication apparatus, where the frequency configuration information indicates the N target frequencies, and the sensing signal on the N target frequencies is used by the second communication apparatus to perform angle measurement.

Optionally, a processed angle measurement range corresponding to any one of the candidate frequencies is obtained by performing first processing on an angle measurement range corresponding to the candidate frequency, and performing first processing on the angle measurement range corresponding to the candidate frequency includes: reserving k decimal places for a value obtained by dividing the angle measurement range corresponding to the candidate frequency by an angle measurement resolution, to obtain a first value, where k is a positive integer; and

multiplying the first value by $10^k$ to obtain the processed angle measurement range corresponding to the candidate frequency.

Optionally, the communication unit 2200 is further configured to: receive information about a first frequency set from the first communication apparatus, where the first communication apparatus supports any frequency in the first frequency set; and receive information about a second frequency set from the second communication apparatus and array structure information of the second communication apparatus, where the array structure information is used to determine the angle measurement range corresponding to the candidate frequency, and the second communication apparatus supports any frequency in the second frequency set. The processing unit 2100 is specifically configured to determine an intersection set of the first frequency set and the second frequency set as the determined candidate set.

Optionally, the communication unit 2200 is further configured to: send indication information to the first communication apparatus, and send the indication information to the second communication apparatus, where the indication information indicates to enable an angle measurement function.

Optionally, at least two candidate frequencies in the candidate frequency set are located in different frequency bands.

It should be understood that the "unit" in the communication apparatus 2000 may be implemented by hardware, or may be implemented by software, or may be implemented by hardware by executing corresponding software. For example, the "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. For another example, the communication unit 2200 may be replaced with a transceiver or a transceiver circuit (for example, may include a receiving circuit and a sending circuit), and the processing unit 2100 may be replaced with a processor or a processing circuit.

FIG. 14 is a block diagram of another communication apparatus 3000 according to an embodiment of this application. The communication apparatus 3000 may be a first communication apparatus, a second communication apparatus, or a third communication apparatus, or may be a chip, a chip system, a processor, or the like that supports the first communication apparatus, the second communication apparatus, or the third communication apparatus in implementing the foregoing methods. The communication apparatus 3000 may be configured to implement the method described in the foregoing method embodiments. For details, refer to the descriptions in the foregoing method embodiments.

The communication apparatus 3000 may include one or more processors 3100. The processor 3100 may also be referred to as a processing unit, and may implement a specific control function. The processor 3100 may be a general-purpose processor, a dedicated processor, or the like, for example, may be a baseband processor or a central processing unit. The baseband processor may be configured to process a communication protocol and communication data. The central processing unit may be configured to control the communication apparatus 3000 (for example, a base station, a baseband chip, a user, or a user chip), execute a software program, and process data of the software program.

In an optional design, the processor 3100 may also store instructions and/or data, and the instructions and/or the data may be run by the processor 3100, to enable the communication apparatus 3000 to perform the method described in the foregoing method embodiments.

In another optional design, the communication apparatus 3000 may include a communication interface 3200 configured to implement receiving and sending functions. For example, the communication interface 3200 may be a transceiver circuit, an interface, an interface circuit, or a transceiver. The transceiver circuit, the interface, the interface circuit, or the transceiver configured to implement the receiving and sending functions may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the communication apparatus 3000 may include one or more memories 3300. The memory may store instructions. The instructions may be run on the processor 3100, to enable the communication apparatus 3000 to perform the method described in the foregoing method embodiments. Optionally, the memory 3300 may further store data. Optionally, the processor 3100 may also store instructions and/or data. The processor 3100 and the memory 3300 may be separately disposed, or may be integrated together.

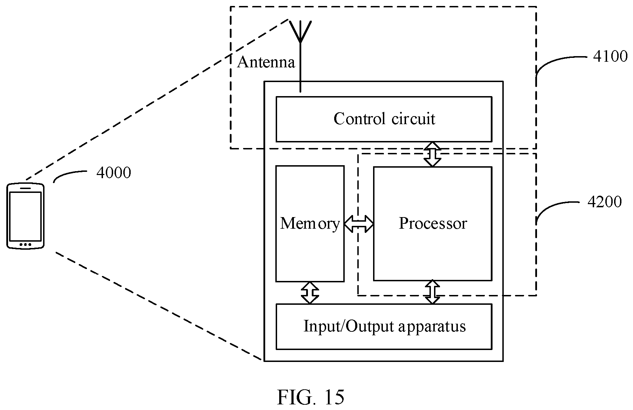

FIG. 15 is a diagram of a structure of a terminal device 4000 according to this application. The communication apparatus 2000 or the communication apparatus 3000 may be configured in the terminal device 4000. Alternatively, the communication apparatus 2000 or the communication apparatus 3000 may be the terminal device 4000. Alternatively, the terminal device 4000 may perform actions performed by a communication apparatus in a form of a terminal device in the foregoing method embodiments. Optionally, for ease of description, FIG. 15 shows only main components of the terminal device. As shown in FIG. 15, the terminal device 4000 includes a processor, a memory, a control circuit, an antenna, and an input/output apparatus.

The processor is mainly configured to process a communication protocol and communication data, control the entire terminal device, execute a software program, and process data of the software program, for example, configured to support the terminal device in performing actions described in the foregoing method embodiments. The memory is mainly configured to store the software program and the data. The control circuit is mainly configured to: convert a baseband signal and a radio frequency signal, and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, after performing baseband processing on the to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 15 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 15 is integrated with functions of the baseband processor and the central processing unit. A person skilled in the art may understand that the baseband processor and the central processing unit may alternatively be processors independent of each other, and are interconnected by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have receiving and sending functions may be considered as a transceiver unit 4100 of the terminal device 4000, and the processor that has a processing function may be considered as a processing unit 4200 of the terminal device 4000. As shown in FIG. 15, the terminal device 4000 includes the transceiver unit 4100 and the processing unit 4200. The transceiver unit may also be referred to as a transceiver, a transceiver machine, a transceiver apparatus, or the like. Optionally, a component configured to implement a receiving function in the transceiver unit 4100 may be considered as a receiving unit, and a component configured to implement a sending function in the transceiver unit 4100 may be considered as a sending unit. That is, the transceiver unit 4100 includes the receiving unit and the sending unit. For example, the receiving unit may also be referred to as a receiver, a receive machine, or a receiving circuit, and the sending unit may also be referred to as a transmitter, a transmit machine, or a transmitting circuit.

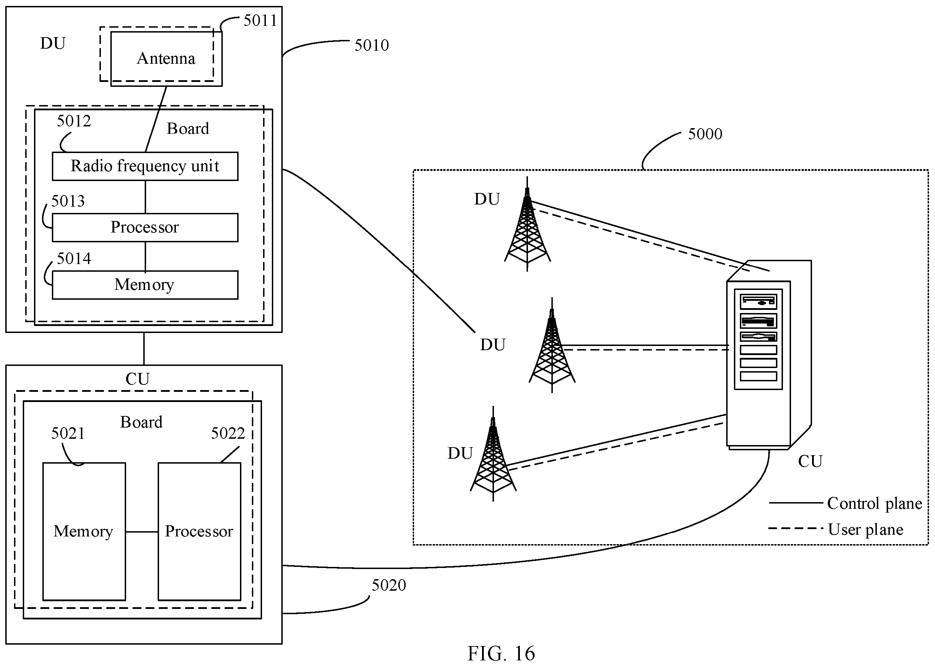

FIG. 16 is a diagram of a structure of a network device 5000 according to an embodiment of this application. The communication apparatus 2000 or the communication apparatus 3000 may be configured in the network device 5000. Alternatively, the communication apparatus 2000 or the communication apparatus 3000 may be the network device 5000. Alternatively, the network device 5000 may perform actions performed by a communication apparatus in a form of a network device in the foregoing method embodiments.

As shown in FIG. 16, the network device 5000 may include one or more distributed units DUs 5010 and one or more central units CUs 5020. The CU 5020 may communicate with a next generation core (NG core, NC) network. The DU 5010 may include at least one antenna 5011, at least one radio frequency unit 5012, at least one processor 5013, and at least one memory 5014. The DU 5010 is mainly configured to: receive and send a radio frequency signal, convert a radio frequency signal and a baseband signal, and perform partial baseband processing. The CU 5020 may include at least one processor 5022 and at least one memory 5021. The CU 5020 and the DU 5010 may communicate with each other through an interface. A control plane (control plane, CP) interface may be Fs-C, for example, F1-C, and a user plane (user plane, UP) interface may be Fs-U, for example, F1-U.

The CU 5020 is mainly configured to: perform baseband processing, control the network device 5000, and the like. The DU 5010 and the CU 5020 may be physically disposed together, or may be physically separated, namely, in a distributed base station. The CU 5020 is a control center of the network device 5000, may also be referred to as a processing unit, and is mainly configured to complete a baseband processing function. For example, the CU 5020 may be configured to control the network device 5000 to perform an operation procedure related to the network device in the foregoing method embodiments.

Specifically, baseband processing on the CU and the DU may be divided based on protocol layers of a wireless network. For example, functions of a packet data convergence protocol (packet data convergence protocol, PDCP) layer and a protocol layer above the PDCP layer are set in the CU. Functions of protocol layers below the PDCP layer, such as a radio link control (radio link control, RLC) layer and a medium access control (medium access control, MAC) layer, are set in the DU. For another example, the CU implements functions of an RRC layer and a PDCP layer, and the DU implements functions of an RLC layer, a MAC layer, and a physical (physical, PHY) layer.

In addition, optionally, the network device 5000 may include one or more radio units (radio unit, RU), one or more DUs, and one or more CUs. The DU may include at least one processor 5013 and at least one memory 5014, the RU may include at least one antenna 5011 and at least one radio frequency unit 5012, and the CU may include at least one processor 5022 and at least one memory 5021.

In an example, the CU 5020 may include one or more boards. A plurality of boards may jointly support a radio access network (for example, a 5G network) of a single access standard, or may separately support radio access networks (such as an LTE network, a 5G network, or another network) of different access standards. The memory 5021 and the processor 5022 may serve one or more boards. In other words, a memory and a processor may be disposed on each board. Alternatively, a plurality of boards may share a same memory and a same processor. In addition, a necessary circuit may further be disposed on each board. The DU 5010 may include one or more boards. A plurality of boards may jointly support a radio access network (for example, a 5G network) of a single access standard, or may separately support radio access networks (such as an LTE network, a 5G network, or another network) of different access standards. The memory 5014 and the processor 5013 may serve one or more boards. In other words, a memory and a processor may be disposed on each board. Alternatively, a plurality of boards may share a same memory and a same processor. In addition, a necessary circuit may further be disposed on each board.

It should be understood that the network device 5000 shown in FIG. 16 can implement operations performed by a communication apparatus in a form of a network device in the foregoing method embodiments. Operations and/or functions of modules in the network device 5000 are respectively for implementing corresponding procedures in the foregoing method embodiments. For details, refer to the descriptions in the foregoing method embodiments. To avoid repetition, detailed descriptions are properly omitted herein.

It should be understood that the network device 5000 shown in FIG. 16 is merely a possible architecture of the network device, and should not constitute any limitation on this application. The method provided in this application may be applicable to a network device in another architecture, for example, a network device including a CU, a DU, and an active antenna unit (active antenna unit, AAU), or a network device that does not distinguish between a CU and a DU. A specific architecture of the network device is not limited in this application.

It should be understood that, in a possible design, the steps in the method embodiments provided in this application may be completed by using a hardware integrated logic circuit in the processor or instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these and any memory of another proper type.

This application further provides a computer program product. The computer program product includes a computer program or instructions. When the computer program or the instructions are run on a computer, the computer is enabled to perform the steps or procedures performed by the first communication apparatus, the second communication apparatus, or the third communication apparatus in any one of the foregoing method embodiments.

This application further provides a computer-readable storage medium. The computer-readable storage medium stores a program or instructions. When the program or the instructions are run on a computer, the computer is enabled to perform the steps or procedures performed by the first communication apparatus, the second communication apparatus, or the third communication apparatus in any one of the foregoing method embodiments.

This application further provides a communication system, including a first communication apparatus and/or a second communication apparatus, or the first communication apparatus, the second communication apparatus, and/or a third communication apparatus.

The foregoing apparatus embodiments completely correspond to the method embodiments, and corresponding modules or units perform corresponding steps. For example, a communication unit or a communication interface performs receiving or sending steps in the method embodiments, and steps other than sending and receiving may be performed by a processing unit or a processor.

In embodiments of this application, the terms and English abbreviations are all examples provided for ease of description, and should not constitute any limitation on this application. This application does not exclude a possibility of defining another term that can implement a same or similar function in an existing or a future protocol.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable storage media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical block) and steps (step) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When the software is used to implement embodiments, all or some of embodiments may be implemented in a form of a computer program product. The computer program product includes one or more computer instructions (programs). When the computer program instructions (programs) are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An angle measurement method, applied to a first communication apparatus, wherein the method comprises:

determining N target frequencies, wherein the N target frequencies belong to a candidate frequency set, the candidate frequency set comprises M candidate frequencies, 1<N<M, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, wherein the processed angle measurement range is a positive integer; and
sending a sensing signal on the N target frequencies, wherein the sensing signal is used by a second communication apparatus to perform angle measurement.

2. The method according to claim 1, wherein a processed angle measurement range corresponding to any one of the candidate frequencies is obtained by performing first processing on an angle measurement range corresponding to the candidate frequency, and performing first processing on the angle measurement range corresponding to the candidate frequency comprises:

reserving k decimal places for a value obtained by dividing the angle measurement range corresponding to the candidate frequency by an angle measurement resolution, to obtain a first value, wherein k is an integer greater than or equal to 0; and
multiplying the first value by $10^k$ to obtain the processed angle measurement range corresponding to the candidate frequency.

3. The method according to claim 1 or 2, wherein determining the N target frequencies comprises:

receiving frequency configuration information from the second communication apparatus; or receiving the frequency configuration information from a third communication apparatus, wherein

the frequency configuration information indicates the N target frequencies.

4. The method according to claim 3, wherein before receiving the frequency configuration information from the second communication apparatus, the method further comprises:

sending information about the candidate frequency set to the second communication apparatus, wherein the first communication apparatus supports any candidate frequency in the candidate frequency set; or before receiving the frequency configuration information from the third communication apparatus, the method further comprises: sending information about a first frequency set to the third communication apparatus, wherein the first communication apparatus supports any frequency in the first frequency set, the first frequency set comprises any candidate frequency in the candidate frequency set, and both the first communication apparatus and the second communication apparatus support any candidate frequency in the candidate frequency set.

5. The method according to claim 4, wherein before sending the information about the candidate frequency set to the second communication apparatus, the method further comprises:

receiving indication information from the second communication apparatus; or before sending the information about the first frequency set to the third communication apparatus, the method further comprises:

receiving the indication information from the third communication apparatus, wherein the indication information indicates to enable an angle measurement function.

6. The method according to claim 1 or 2, wherein before sending the sensing signal on the N target frequencies to the second communication apparatus, the method further comprises: sending frequency configuration information to the second communication apparatus, wherein the frequency configuration information indicates the N target frequencies.

7. The method according to claim 6, wherein before determining the N target frequencies, the method further comprises: receiving information about the candidate frequency set from the second communication apparatus and array structure information of the second communication apparatus, wherein the array structure information indicates a smallest spacing between array elements in an antenna array, the array structure information is used to determine the angle measurement range corresponding to the candidate frequency, and the second communication apparatus supports any candidate frequency in the candidate frequency set.

8. The method according to claim 7, wherein before receiving the information about the candidate frequency set from the second communication apparatus, the method further comprises: sending indication information to the second communication apparatus, wherein the indication information indicates to enable an angle measurement function.

9. The method according to any one of claims 1 to 8, wherein at least two candidate frequencies in the candidate frequency set are located in different frequency bands.

10. An angle measurement method, applied to a second communication apparatus, wherein the method comprises:

determining N target frequencies, wherein the N target frequencies belong to a candidate frequency set, the candidate frequency set comprises M candidate frequencies, $1<N<M$, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, wherein the processed angle measurement range is a positive integer; receiving a sensing signal from a first communication apparatus on the N target frequencies; and performing angle measurement based on the sensing signal.

11. The method according to claim 10, wherein a processed angle measurement range corresponding to any one of the candidate frequencies is obtained by performing first processing on an angle measurement range corresponding to the candidate frequency, and performing first processing on the angle measurement range corresponding to the candidate frequency comprises:

> reserving k decimal places for a value obtained by dividing the angle measurement range corresponding to the candidate frequency by an angle measurement resolution, to obtain a first value, wherein k is a positive integer greater than or equal to 0; and
> multiplying the first value by $10^k$ to obtain the processed angle measurement range corresponding to the candidate frequency.

12. The method according to claim 10 or 11, wherein before receiving the sensing signal on the N target frequencies from the first communication apparatus, the method further comprises:
sending frequency configuration information to the first communication apparatus, wherein the frequency configuration information indicates the N target frequencies.

13. The method according to claim 12, wherein before determining the N target frequencies, the method further comprises:
receiving information about the candidate frequency set from the first communication apparatus, wherein the first communication apparatus supports any candidate frequency in the candidate frequency set.

14. The method according to claim 13, wherein before receiving the information about the candidate frequency set from the first communication apparatus, the method further comprises:
sending indication information to the first communication apparatus, wherein the indication information indicates to enable an angle measurement function.

15. The method according to claim 10 or 11, wherein determining the N target frequencies comprises:

> receiving frequency configuration information from the first communication apparatus; or
> receiving the frequency configuration information from a third communication apparatus, wherein
> the frequency configuration information indicates the N target frequencies.

16. The method according to claim 15, wherein before receiving the frequency configuration information from the first communication apparatus, the method further comprises:

> sending information about the candidate frequency set and array structure information of the second communication apparatus to the first communication apparatus, wherein the array structure information is used to determine the angle measurement range corresponding to the candidate frequency, and the second communication apparatus supports any candidate frequency in the candidate frequency set; or
before receiving the frequency configuration information from the third communication apparatus, the method further comprises:
sending information about a second frequency set and the array structure information to the third communication apparatus, wherein the second communication apparatus supports any frequency in the second frequency set, the second frequency set comprises any candidate frequency in the candidate frequency set, and both the first communication apparatus and the second communication apparatus support any candidate frequency in the candidate frequency set.

17. The method according to claim 16, wherein before sending the information about the candidate frequency set to the first communication apparatus, the method further comprises:

> receiving indication information from the first communication apparatus; or
> before sending the information about the second frequency set to the third communication apparatus, the method further comprises:

>> receiving the indication information from the third communication apparatus, wherein the indication information indicates to enable an angle measurement function.

18. The method according to any one of claims 10 to 17, wherein at least two candidate frequencies in the candidate frequency set are located in different frequency bands.

19. An angle measurement method, applied to a third communication apparatus, wherein the method comprises:

> determining a candidate frequency set, wherein the candidate frequency set comprises M candidate frequencies, and both a first communication apparatus and a second communication apparatus support any candidate frequency in the candidate frequency set;
> determining N target frequencies in the candidate frequency set, wherein 1<N<M, and a least common multiple of processed angle measurement ranges corresponding to the N target frequencies is greater than a preset angle measurement range, or the least common multiple of the processed angle measurement ranges corresponding to the N target frequencies is greater than or equal to a least common multiple of processed angle measurement ranges corresponding to any N candidate frequencies in the candidate frequency set, wherein the processed angle measurement range is a positive integer; and
sending frequency configuration information to the first communication apparatus and the second communication apparatus, wherein the frequency configuration information indicates the N target frequencies, and the sensing signal on the N target frequencies is used by the second communication apparatus to perform angle measurement.

20. The method according to claim 19, wherein a processed angle measurement range corresponding to any one of the candidate frequencies is obtained by performing first processing on an angle measurement range corresponding to the candidate frequency, and performing first processing on the angle measurement range corresponding to the candidate frequency comprises:

reserving k decimal places for a value obtained by dividing the angle measurement range corresponding to the candidate frequency by an angle measurement resolution, to obtain a first value, wherein k is a positive integer; and
multiplying the first value by $10^k$ to obtain the processed angle measurement range corresponding to the candidate frequency.

21. The method according to claim 19 or 20, wherein before determining the candidate frequency set, the method further comprises:

receiving information about a first frequency set from the first communication apparatus, wherein the first communication apparatus supports any frequency in the first frequency set;
receiving information about a second frequency set from the second communication apparatus and array structure information of the second communication apparatus, wherein the array structure information is used to determine the angle measurement range corresponding to the candidate frequency, and the second communication apparatus supports any frequency in the second frequency set; and
determining an intersection set of the first frequency set and the second frequency set as the determined candidate set.

22. The method according to claim 21, wherein before receiving the information about the first frequency set from the first communication apparatus, the method further comprises:

sending indication information to the first communication apparatus; and
before receiving the information about the second frequency set from the second communication apparatus, the method further comprises:

sending the indication information to the second communication apparatus, wherein the indication information indicates to enable an angle measurement function.

23. The method according to any one of claims 19 to 22, wherein at least two candidate frequencies in the candidate frequency set are located in different frequency bands.

24. A communication apparatus, comprising a unit configured to perform steps of the method according to any one of claims 1 to 9.

25. A communication apparatus, comprising a unit configured to perform steps of the method according to any one of claims 10 to 18.

26. A communication apparatus, comprising a unit configured to perform steps of the method according to any one of claims 19 to 23.

27. A communication apparatus, comprising a processor, wherein the processor is configured to enable, by executing a program or instructions stored in a memory or by using a logic circuit, the apparatus to perform the method according to any one of claims 1 to 9, any one of claims 10 to 18, or any one of claims 19 to 23.

28. The apparatus according to claim 27, further comprising the memory and/or a communication interface, wherein the communication interface is configured to input and/or output a signal.

29. A computer-readable storage medium, wherein the computer-readable storage medium stores a computer program or instructions, and when the computer program or the instructions are executed, the computer is enabled to perform the method according to any one of claims 1 to 9, any one of claims 10 to 18, or any one of claims 19 to 23.

30. A computer program product, comprising computer program instructions, wherein the computer program instructions enable the computer to perform the method according to any one of claims 1 to 9, any one of claims 10 to 18, or any one of claims 19 to 23.

**31.** A chip, comprising a processor, configured to invoke a computer program from a memory and run the computer program, to enable a communication apparatus on which the chip is installed to perform the method according to any one of claims 1 to 9, any one of claims 10 to 18, or any one of claims 19 to 23.

**32.** A communication system, comprising the communication apparatus according to claim 24 and the communication apparatus according to claim 25.

Network
device 130

Terminal
device 110

Target object 120

(a)

Terminal
device 160

Network
device 140

Target object 150

(b)

FIG. 1

Network
device 230

Network
device 210

Target object 220

(a)

Terminal
device 260

Terminal
device 240

Target object 250

(b)

FIG. 2

Network
device 320

Target
object 310

(a)

Target
object 330

Terminal
device 340

(b)

FIG. 3

Network
device 430

Sensing
target 440

Control
signal

Car 410

Car 420

FIG. 4

FIG. 5

FIG. 6

2 GHz

3 GHz

5 GHz

FIG. 7

FIG. 8

FIG. 9

600

| First communication apparatus | | Second communication apparatus |
|---|---|---|

S601: Indication information (indicating to enable an angle measurement function)

S602: Information about a candidate frequency set and structure information of an antenna array

S603: Determine N target frequencies in the candidate frequency set

S604: Frequency configuration information (indicating the N target frequencies)

S605: Send a sensing signal based on the N target frequencies

S606: Perform angle measurement based on the sensing signal

FIG. 10

700

| First communication apparatus | | Second communication apparatus |
|---|---|---|

S701: Indication information (indicating to enable an angle measurement function)

S702: Information about a candidate frequency set

S703: Determine N target frequencies in the candidate frequency set

S704: Frequency configuration information (indicating the N target frequencies)

S705: Send a sensing signal based on the N target frequencies

S706: Perform angle measurement based on the sensing signal

FIG. 11

800

| Third communication apparatus | First communication apparatus | Second communication apparatus |

S801: Indication information (indicating to enable an angle measurement function)

S802: Indication information (indicating to enable the angle measurement function)

S803: Information about a first frequency set

S804: Information about a second frequency set

S805: Determine a candidate frequency set

S806: Determine N target frequencies in the candidate frequency set

S807: Frequency configuration information (indicating the N target frequencies)

S808: Frequency configuration information (indicating the N target frequencies)

S809: Send a sensing signal based on the N target frequencies

S810: Perform angle measurement based on the sensing signal

FIG. 12

Communication
apparatus 2000

Processing unit
2100

Communication unit
2200

FIG. 13

Communication apparatus 3000

Processor
3100

Memory
3300

Communication
interface
3200

FIG. 14

Antenna

Control circuit

Memory ⇔ Processor

Input/Output apparatus

4100

4000

4200

FIG. 15

FIG. 16

EP 4 614 284 A1

## INTERNATIONAL SEARCH REPORT

| International application No. |
|---|
| **PCT/CN2022/136687** |

**A.    CLASSIFICATION OF SUBJECT MATTER**

G06F 3/033(2013.01)i;  G01S13/00(2006.01)i

According to International Patent Classification (IPC) or to both national classification and IPC

**B.    FIELDS SEARCHED**

Minimum documentation searched (classification system followed by classification symbols)

IPC:G06F G01S

Documentation searched other than minimum documentation to the extent that such documents are included in the fields searched

Electronic data base consulted during the international search (name of data base and, where practicable, search terms used)

CNTXT, ENTXT, WPABS, VEN, CNKI: 测量, 计算, 估算, 估计, 角度, 入射角, 到达角, 方位角, 天线, 频率, 频带, 频段, 发送, 测量信号, 感知信号, 感测信号, 测角范围, 最大模糊, 最小公倍数, 分辨率, measure, calculate, estimate, angle, angle of incidence, angle of arrival, AOA, antenna, frequency, band, transmit, measure signal, sense signal, goniometric range, least common multiple, LCM, resolution

**C.    DOCUMENTS CONSIDERED TO BE RELEVANT**

| Category* | Citation of document, with indication, where appropriate, of the relevant passages | Relevant to claim No. |
|---|---|---|
| A | CN 115150737 A (U-BLOX AG) 04 October 2022 (2022-10-04)<br>   description, paragraphs 84-104, and figures 1-4 | 1-32 |
| A | CN 107688178 A (SHANGHAI TONGQU TECHNOLOGY CO., LTD.) 13 February 2018 (2018-02-13)<br>   entire document | 1-32 |
| A | CN 112601282 A (PURPLE MOUNTAIN LABORATORIES FOR NETWORK AND COMMUNICATION SECURITY) 02 April 2021 (2021-04-02)<br>   entire document | 1-32 |
| A | CN 114577171 A (GUANGDONG OPPO MOBILE TELECOMMUNICATIONS CORP., LTD.) 03 June 2022 (2022-06-03)<br>   entire document | 1-32 |
| A | US 2019265353 A1 (GOVERMENT OF THE UNITED STATES, AS REPRESENTED BY THE SECRETARY OF THE AIR FORCE et al.) 29 August 2019 (2019-08-29)<br>   entire document | 1-32 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 August 2023** | **16 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/136687** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2021325524 A1 (MITSUBISHI ELECTRIC CORP.) 21 October 2021 (2021-10-21)<br>entire document | 1-32 |

Form PCT/ISA/210 (second sheet) (July 2022)

## INTERNATIONAL SEARCH REPORT
### Information on patent family members

International application No.

**PCT/CN2022/136687**

| Patent document cited in search report | | | Publication date (day/month/year) | Patent family member(s) | | | Publication date (day/month/year) |
|---|---|---|---|---|---|---|---|
| CN | 115150737 | A | 04 October 2022 | EP | 4067928 | A1 | 05 October 2022 |
| | | | | US | 2022308151 | A1 | 29 September 2022 |
| CN | 107688178 | A | 13 February 2018 | | None | | |
| CN | 112601282 | A | 02 April 2021 | WO | 2022183813 | A1 | 09 September 2022 |
| CN | 114577171 | A | 03 June 2022 | | None | | |
| US | 2019265353 | A1 | 29 August 2019 | WO | 2019166757 | A1 | 06 September 2019 |
| | | | | GB | 201803239 | D0 | 11 April 2018 |
| | | | | KR | 20210004964 | A | 13 January 2021 |
| | | | | JP | 2021524017 | A | 09 September 2021 |
| | | | | EP | 3759513 | A1 | 06 January 2021 |
| | | | | GB | 201902611 | D0 | 10 April 2019 |
| | | | | GB | 2573605 | A | 13 November 2019 |
| | | | | GB | 2573605 | B | 08 September 2021 |
| | | | | US | 11693112 | B2 | 04 July 2023 |
| | | | | CN | 112055819 | A | 08 December 2020 |
| US | 2021325524 | A1 | 21 October 2021 | JPWO | 2020157924 | A1 | 30 April 2021 |
| | | | | JP | 6873341 | B2 | 19 May 2021 |
| | | | | WO | 2020157924 | A1 | 06 August 2020 |
| | | | | DE | 112019006521 | T5 | 23 September 2021 |
| | | | | DE | 112019006521 | B4 | 29 December 2022 |
| | | | | CN | 113412433 | A | 17 September 2021 |

Form PCT/ISA/210 (patent family annex) (July 2022)